# EUROPÄISCHE PATENTSCHRIFT

(11) **EP 2 961 520 B1**
(45) Veröffentlichungstag und Bekanntmachung des Hinweises auf die Patenterteilung: **20.07.2016**
(21) Anmeldenummer: 14705541.2
(22) Anmeldetag: 21.02.2014
(51) Int. Cl.: B01D 67/00, B01D 71/80

(54) **PORÖSE MEMBRANEN AUS VERNETZTEM THERMOPLASTISCHEM SILICONELASTOMER**
POROUS MEMBRANES MADE OF CROSS-LINKED THERMOPLASTIC SILICONE ELASTOMER
MEMBRANES À POROSITÉ ASYMÉTRIQUE À BASE D'ÉLASTOMÈRE SILICONE THERMOPLASTIQUE RÉTICULÉ

(30) Priorität: 26.02.2013 DE 102013203127
(43) Veröffentlichungstag der Anmeldung: 06.01.2016
(73) Patentinhaber: Wacker Chemie AG, 81737 München (DE)
(72) Erfinder: HALBACH, Tobias, 81543 München (DE)
(74) Vertreter: Fritz, Helmut
(86) Internationale Anmeldenummer: PCT/EP2014/053452
(87) Internationale Veröffentlichungsnummer: WO 2014/131706

(56) Entgegenhaltungen:
- EP-A1- 0 363 364
- DE-A1-102008 041 477
- JP-A- S5 814 925

## Beschreibung

Die Erfindung betrifft ein Verfahren zur Herstellung vernetzter poröser Membranen aus thermoplastischem Siliconelastomer, sowie die damit erhältlichen Membranen und deren Verwendung.

Membranen sind dünne poröse Formkörper und finden Anwendung zur Trennung von Gemischen. Eine weitere Anwendung ergibt sich im Textilbereich, z.B. als atmungsaktive und wasserabweisende Membran. Ein Vorteil von Membran-Trennverfahren ist, dass sie auch bei niedrigen Temperaturen, wie beispielsweise bei Raumtemperatur, durchgeführt werden können und somit im Vergleich zu thermischen Trennverfahren, wie Destillation, energetisch weniger aufwändig sind.
Ein bekannter Prozess für die Verarbeitung von Celluloseacetat oder Polyvinylidenfluorid zu dünnen porösen Membranen ist die Phaseninversion durch Verdampfen. Ein Fällmedium oder eine zusätzliche Aufschäumreaktion wird dabei nicht benötigt. Im einfachsten Fall wird eine ternäre Mischung aus einem Polymer, einem leicht flüchtigen Lösungsmittel und einem zweiten schwerer flüchtigen Lösungsmittel hergestellt. Nach der Nassfilmbildung verdampft das flüchtige Lösungsmittel, was dazu führt, dass das Polymer in dem zweiten Lösungsmittel ausfällt und eine poröse Struktur ausbildet. Die Poren sind mit dem zweiten Lösungsmittel gefüllt. Das zweite Lösungsmittel wird danach aus der Membran entfernt, z.B. durch Auswaschen oder Abdampfen, und man erhält letztlich eine poröse Membran. Beispielsweise ist in EP363364 die Herstellung von porösen PVDF-Membranen aufbauend auf diesem Herstellungsprozess beschrieben.
Die Verwendung dieses Prozesses für Silicone ist dem Fachmann nicht geläufig, da normalerweise, falls sich tatsächlich Poren beim Verdampfen ausbilden, diese aufgrund der noch vorhandenen Fließfähigkeit des Silicons in sich zusammensacken und damit die Membran seine Porosität verliert.
Die Herstellung poröser Silicon-Membranen nach dem Loeb-Sourirajan-Verfahren ist bekannt. So wird z.B. in JP59225703 die Herstellung einer porösen Silicon-Membran aus einem Silicon-Carbonat-Copolymer gelehrt. Durch dieses Verfahren wird ausschließlich eine anisotrope Porengröße entlang der Filmschichtdicke erhalten. Daneben benötigt man dabei auch immer ein separates Fällungsbad.

DE102010001482 lehrt die Herstellung von isotropen Silicon-Membranen mittels einer verdampfungsinduzierten Phasenseparation. Nachteilig bei diesem Verfahren ist jedoch die Tatsache, dass für diesen Prozess thermoplastische Siliconelastomere notwendig sind, wodurch die so zugänglichen Membranen deutlich weniger temperaturstabil sind als vergleichbare dünne Siliconkautschukfolien. Des Weiteren weisen thermoplastische Siliconelastomere einen unerwünschten sogenannten "kalten Fluss" auf, wodurch die porösen Membranen unter Dauerbelastung ihre Membranstruktur ändern.

DE 10 2008 041 477 JP 58014925 beschreiben vernetzte Membranen aus thermoplastischem Siliconelastoner.

Es bestand daher die Aufgabe einen Prozess zu entwickeln, mit dem sich dünne, poröse, vernetzte und thermisch stabile Siliconmembranen auf eine technisch sehr einfache Weise herstellen lassen, der allerdings die Nachteile der bisher bekannten Herstellungsprozesse und Membranen nicht mehr aufweist und der es weiterhin ermöglicht thermoplastische Siliconelastomere einzusetzen, sowie einfach und wirtschaftlich durchzuführen ist.

Gegenstand der Erfindung ist ein Verfahren zur Herstellung dünner poröser Membranen aus thermoplastischer Siliconverbindung S, wie beschrieben in Patentanspruch 1.

Überraschender Weise wurde gefunden, dass sich so auf einfache Weise dünne und vernetzte poröse Silicon-Membranen herstellen lassen, welche thermisch stabil sind und keinen "kalten Fluss" mehr aufweisen.

Vorzugsweise geliert die Siliconzusammensetzung SZ bzw. fällt aus im dritten Schritt und dabei wird die dünne poröse Membran aus der Phase A erhalten. Die Poren werden durch die Phase B gebildet.

Die Siliconzusammensetzung SZ kann als weitere Komponenten Katalysator K und/oder Additive A enthalten.

Die Siliconelastomere S1 werden im vierten Schritt mit dem Vernetzer V kovalent vernetzt. Die Alkenylgruppenhaltige Siliconverbindung S2 wird ebenfalls durch Vernetzer V kovalent mit Siliconverbindung S1 vernetzt.

Bei Rest R³ handelt es sich bevorzugt um einwertige Kohlenwasserstoffreste mit 1 bis 18 Kohlenstoffatomen, die gegebenenfalls mit Halogenatomen, Aminogruppen, Ethergruppen, Estergruppen, Epoxygruppen, Mercaptogruppen, Cyanogruppen oder (Poly)-glykolresten substituiert sind, wobei letztere aus Oxyethylen-und/oder Oxypropyleneinheiten aufgebaut sind, besonders bevorzugt um Alkylreste mit 1 bis 12 Kohlenstoffatomen, insbesondere um den Methylrest.
Bevorzugt enthält mindestens ein Rest R³ pro Siloxaneinheit 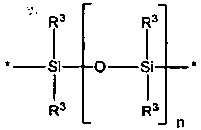 der Organopolysiloxan-Copolymere der allgemeinen Formel I eine Alkenylgruppe, ganz besonders bevorzugt enthalten 1-5 Reste R³ pro Siloxaneinheit 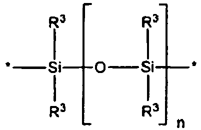 der Organopolysiloxan-Copolymere der allgemeinen Formel I eine Alkenylgruppe.

Beispiele für Reste R³ sind Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl--, neo-Pentyl-, tert.-Pentylrest; Hexylreste, wie der n-Hexylrest; Heptylreste, wie der n-Heptylrest; Octylreste, wie der n-Octylrest und iso-Octylreste, wie der 2,2,4-Trimethylpentylrest; Nonylreste, wie der n-Nonylrest; Decylreste, wie der n-Decylrest; Dodecylreste, wie der n-Dodecylrest; Octadecylreste, wie der n-Octadecylrest; Cycloalkylreste, wie der Cyclopentyl-, Cyclohexyl-, Cycloheptylrest und Methylcyclohexylreste; Arylreste, wie der Phenyl-, Naphthyl-, Anthryl- und Phenanthrylrest; Alkarylreste, wie o-, m-, p-Tolylreste; Xylylreste und Ethylphenylreste; und Aralkylreste, wie der Benzylrest, der α- und der β-Phenylethylrest.

Beispiele für substituierte Reste R³ sind Methoxyethyl-, Ethoxyethyl- und der Ethoxyethoxyethylrest oder Chlorpropyl- und Trifluorpropylrest.

Beispiele für zweiwertige Reste R³ sind der Ethylenrest, Polyisobutylendiylreste und propandiylterminierte Polypropylenglykolreste.

Beispiele für Alkenylgruppen enthaltende Reste R³ sind Alkenylreste mit 2 bis 12, vorzugsweise 2 bis 8 Kohlenstoffatomen. Bevorzugt sind Vinylrest und n-Hexenylrest.

Bevorzugt handelt es sich bei dem Rest R^{H} um Wasserstoff oder die für R³ vorstehend angegebenen Reste.

Bevorzugt handelt es sich bei Rest Y um gegebenenfalls mit Halogenatome, wie Fluor oder Chlor, substituierte Kohlenwasserstoffreste mit 3 bis 13 Kohlenstoffatomen, besonders bevorzugt um einen Kohlenwasserstoffrest mit 3 bis 13 Kohlenstoffatomen, insbesondere den 1,6-Hexamethylenrest, den 1,4-Cyclohexylenrest, den Methylen-bis-(4-cyclohexylen)rest, den 3-Methylen-3,5,5-trimethylcyclohexylenrest, den Phenylen- und den Naphthylenrest, den m-Tetramethylxylylenrest sowie den Methylen-bis-(4-phenylen)-Rest.

Beispiele für zweiwertige Kohlenwasserstoffreste Y sind Alkylenreste, wie der Methylen-, Ethylen-, n-Propylen-, isoPropylen-, n-Butylen-, iso-Butylen-, tert.-Butylen-, n-Pentylen-, iso-Pentylen-, neo-Pentylen-, tert.-Pentylenrest, Hexylenreste, wie der n-Hexylenrest, Heptylenreste, wie der n-Heptylenrest, Octylenreste, wie der n-Octylenrest und iso-Octylenreste, wie der 2,2,4-Trimethylpentylenrest, Nonylenreste, wie der n-Nonylenrest, Decylenreste, wie der n-Decylenrest, Dodecylenreste, wie der n-Dodecylenrest; Cycloalkylenreste, wie Cyclopentylen , Cyclohexylen-, Cycloheptylenreste, und Methylcyclohexylenreste, wie der Methylen-bis-(4-cyclohexylen)- und der 3-Methylen-3,5,5-trimethylcyclohexylenrest; Arylenreste, wie der Phenylen- und der Naphthylenrest; Alkarylenreste, wie o-, m-, p-Tolylenreste, Xylylenreste, wie der m-Tetramethylxylylenrest, und Ethylphenylenreste; Aralkylenreste, wie der Benzylenrest, der α- und der β-Phenylethylenrest sowie der Methylen-bis-(4-phenylen)-Rest.

Vorzugsweise handelt es sich bei Rest **X** um Alkylenreste mit 1 bis 20 Kohlenstoffatomen, die durch Sauerstoffatome unterbrochen sein können, besonders bevorzugt um Alkylenreste mit 1 bis 10 Kohlenstoffatomen, die durch Sauerstoffatome unterbrochen sein können, insbesondere bevorzugt um n-Propylen-, Isobutylen-, 2-Oxabutylen- und Methylenreste.

Beispiele für Reste **X** sind die für Rest **Y** angegebenen Beispiele sowie gegebenenfalls substituierte Alkylenreste, in denen die Kohlenstoffkette durch Sauerstoffatome durchbrochen sein kann, wie z.B. 2-Oxabutylenrest.

Bei Rest **B** handelt es sich dabei bevorzugt um ein Wasserstoffatom, einen Rest OCN-Y-NH-CO-, einen Rest H₂N-Y-NH-CO-, einen Rest R³₃Si-(O-SiR³₂)ₙ- oder einen Rest R³₃Si-(O-SiR³₂)ₙ -X-E-.

Bei Rest **B'** handelt es sich bevorzugt um die für **B** angegeben Reste.

Bei Rest D handelt es sich bevorzugt um zweiwertige Polyetherreste und Alkylenreste, besonders bevorzugt um zweiwertige Polypropylenglykolreste sowie Alkylenreste mit mindestens 2 und höchstens 20 Kohlenstoffatomen, wie den Ethylen-, den 2-Methylpentylen und den Butylenrest, insbesondere handelt es sich um Polypropylenglykolreste mit 2 bis 600 Kohlenstoffatomen sowie den Ethylen- und den 2-Methylpentylenrest.

**n** bedeutet vorzugsweise eine Zahl von mindestens 3, insbesondere mindestens 10 und vorzugsweise höchstens 800, insbesondere höchstens 400.

**m** bedeutet vorzugsweise die für n angegebenen Bereiche.

Vorzugsweise bedeutet **g** eine Zahl von höchstens 100, besonders bevorzugt von 10 bis 60.

Vorzugsweise bedeutet **h** eine Zahl von höchstens 10, besonders bevorzugt von 0 oder 1, insbesondere 0.

**j** bedeutet vorzugsweise eine Zahl von höchstens 400, besonders bevorzugt 1 bis 100, insbesondere 1 bis 20.

Vorzugsweise bedeutet **i** eine Zahl von höchstens 10, besonders bevorzugt von 0 oder 1, insbesondere 0.

Beispielsweise ist E=Ia, R^{H}=H, Y= 75 mol% m-Tetramethylxylylen und 25 mol% Methylen-bis-(4-cyclohexylen), R³=CH₃ und je eine H₂C=CH-Gruppe pro Siloxaneinheit, X=n-Propylen, D=2-Methylpentylen, B,B'=H₂N-Y-NH-CO-, n=14, g=9, h=1, i=0, j=10.

Vernetzer V können beispielsweise SiH-Organosiliciumverbindungen mit mindestens zwei SiH-Funktionen pro Molekül, Photoinitiatoren, Photosensibilisatoren, Peroxide oder Azoverbindungen sein.

Als Vernetzer V können mindestens zwei SiH-Funktionen pro Molekül enthaltende Organosiliciumverbindungen eingesetzt werden. Die SiH-Organosiliciumverbindung besitzt vorzugsweise eine Zusammensetzung der durchschnittlichen allgemeinen Formel (III)

H_{f}R⁵_{g}SiO_{(4-f-g)/2} (III),

in der
- **R⁵**: einen einwertigen, gegebenenfalls halogen- oder cyanosubstituierten, über SiC-gebundenen C₁-C₁₈-Kohlenwasserstoffrest, der frei ist von aliphatischen Kohlenstoff-Kohlenstoff Mehrfachbindungen und
- **f** und **g**: nichtnegative ganze Zahlen sind,
mit der Maßgabe, dass 0,5 < **(f+g)** < 3,0 und 0 < **f** < 2, und dass mindestens zwei siliciumgebundene Wasserstoffatome pro Molekül vorhanden sind.

Beispiele für **R⁵** sind die für **R²** angegebenen Reste. **R⁵** weist vorzugsweise 1 bis 6 Kohlenstoffatome auf. Insbesondere bevorzugt sind Methyl und Phenyl.

Bevorzugt ist die Verwendung einer drei oder mehr SiH-Bindungen pro Molekül enthaltenden SiH-Organosiliciumverbindung. Bei Verwendung einer nur zwei SiH-Bindungen pro Molekül aufweisenden SiH-Organosiliciumverbindung empfiehlt sich die Verwendung eines thermoplastischen Siliconelastomers S1 und/oder einer Alkenylgruppen-haltigen Siliconverbindung S2, die über mindestens drei Alkenylgruppen pro Molekül verfügt.

Der Wasserstoffgehalt der SiH-Organosiliciumverbindung, welcher sich ausschließlich auf die direkt an Siliciumatome gebundenen Wasserstoffatome bezieht, liegt vorzugsweise im Bereich von 0,002 bis 1,7 Gew.-% Wasserstoff, vorzugsweise von 0,1 bis 1,7 Gew.-% Wasserstoff.

Die SiH-Organosiliciumverbindung enthält vorzugsweise mindestens drei und höchstens 600 Siliciumatome pro Molekül. Bevorzugt ist die Verwendung von SiH-Organosiliciumverbindung, die 4 bis 200 Siliciumatome pro Molekül enthält.

Die Struktur der SiH-Organosiliciumverbindung kann linear, verzweigt, cyclisch oder netzwerkartig sein.

Besonders bevorzugte SiH-Organosiliciumverbindung sind lineare Polyorganosiloxane der allgemeinen Formel (IV)

(HR⁶₂SiO_{1/2})ₛ(R⁶₃SiO_{1/2})ₜ(HR⁶SiO_{2/2})ᵤ(R⁶₂SiO_{2/2})ᵥ (IV),

wobei
**R⁶** die Bedeutungen von **R⁵** hat und
die nichtnegativen ganzen Zahlen **s**, **t**, **u** und **v** folgende Relationen erfüllen: (**s**+**t**) = 2, (**s**+**u**) > 2, 5 < (**u**+**v**) < 200 und 1 < **u**/(**u** +**v**) < 0,1.

Beispielsweise ist R⁶=CH₃, t=2, u=48, v=90 oder R⁶=CH₃, t=2, u=9, v=6 oder R⁶=CH₃, s=2, v=11.

Die SiH-funktionelle SiH-Organosiliciumverbindung ist vorzugsweise in einer solchen Menge in der Siliconzusammensetzung SZ enthalten, dass das Molverhältnis von SiH-Gruppen zu Alkenylgruppen bei 0,5 bis 5, insbesondere bei 1,0 bis 3,0 liegt.

Als Vernetzer V können auch Photoinitiatoren und Photosensibilisatoren eingesetzt werden.
Geeignete Photoinitiatoren und Photosensibilisatoren sind jeweils gegebenenfalls substituierte Acetophenone, Propiophenone, Benzophenone, Anthrachinone, Benzile, Carbazole, Xanthone Thioxanthone, Fluorene, Fluorenone, Benzoine, Naphthalinsulfonsäuren, Benzaldehyde und Zimtsäuren, sowie Mischungen aus Photoinitiatoren oder Photosensibilisatoren.

Beispiele hierfür sind Fluorenon, Fluoren, Carbazol; Anisoin; Acetophenon; substituierte Acetophenone, wie 3-Methylacetophenon, 2,2'-Dimethoxy-2-phenylacetophenon, 2,2-Diethoxyacetophenon,4-Methylacetophenon, 3-Bromacetophenon, 3'-Hydroxyacetophenon, 4'-Hydroxyacetophenon, 4-Allylacetophenon, 4'-Ethoxyacetophenon, 4'-Phenoxyacetophenon, p-Diacetylbenzol, p-tert,-Butyltrichloracetophenon; Propiophenon; substituierte Propiophenone, wie 1-[4-(Methylthio)phenyl]-2-morpholin-propanon, 2-Hydroxy-2-methylpropiophenon -;, Benzophenon; substituierte Benzophenone, wie Michlers Keton, 3-Methoxybenzophenon, 3-Hydroxybenzophenon, 4-Hydroxybenzophenon, 4,4'-Dihydroxybenzophenon, 4,4'-Dimethylaminobenzophenon, 4-Dimethylaminobenzophenon, 2,5-Dimethylbenzophenon, 3,4-Dimethylbenzophenon, 2-Methylbenzophenon, 3-Methylbenzophenon, 4-Methylbenzophenon, 4-Chlorbenzophenon, 4-Phenylbenzophenon, 4,4'-Dimethoxybenzophenon, 4-Chlor-4'-benzylbenzophenon, 3,3',4,4'-Benzophenontetracarbonsäuredianhydrid; 2-Benzyl-2-(dimethylamino)-4'-morpholinobutyrophenon; Campherchinon; 2-Chlorothioxanthen-9-on; Dibenzosuberenon; Benzil; substituierte Benzile, wie 4,4'-Dimethylbenzil; Phenathren; substituierte Phenanthrene, wie Phenanthrenquinon; Xanthon; substituierte Xanthone, wie 3-Chlorxanthon, 3,9-Dichlorxanthon, 3-Chlor-8-nonylxanthon; Thioxanthon; substituierte Thioxanthone, wie Isopropenylthioxanthon, Thioxanthen-9-on; Anthrachinon; substituierte Anthrachinone, wie Chloranthrachinon, 2-Ethylanthrachinon, Anthrachinon-1,5-disulfonsäuredinatriumsalz, Anthrachinon-2-sulfonsäurenatriumsalz; Benzoin; substituierte Benzoine, wie Benzoinmethylether, Benzoinethylether, Benzoinisobutylether; 2-Naphthalinsulfonylchlorid; Methylphenylglyoxylat; Benzaldehyd; Zimtsäure; (Cumen)cyclopentadienyleisen(II)Hexafluorophosphat; Ferrocen. Ein Beispiel für einen käuflichen Photoinitiator ist Irgacure^{®} 184 von BASF SE.

Als Vernetzer V können auch Peroxide, insbesondere organische Peroxide eingesetzt werden. Beispiele für organische Peroxide sind Peroxyketal, z.B. 1,1-Bis(tert.-butylperoxy)-3,3,5-trimethylcyclohexan, 2,2-Bis(tert.-butylperoxy)butan; Acylperoxide, wie z. B. Acetylperoxid, Isobutylperoxid, Benzoylperoxid, Di(4-methyl-benzoyl)peroxid, Bis-(2,4-dichlorbenzoyl)peroxid; Dialkylperoxide, wie z. B. Di-tert-butylperoxid, Tert-butyl-cumylperoxid, Dicumylperoxid, 2,5-Dimethyl-2,5-di(tert.-butylperoxy)hexan; und Perester, wie z.B. Tert.-butylperoxyisopropyl-carbonat.

Als Vernetzer V können auch Azoverbindungen, wie z.B. Azo-bis-(isobutyronitril), eingesetzt werden.

Werden SiH-Organosiliciumverbindung eingesetzt, so ist die Anwesenheit eines Hydrosilylierungskatalysators notwendig. Als Hydrosilylierungskatalysatoren können alle bekannten Katalysatoren eingesetzt werden, welche die bei der Vernetzung von additionsvernetzenden Siliconzusammensetzungen ablaufenden Hydrosilylierungsreaktionen katalysieren.

Als Hydrosilylierungskatalysatoren werden insbesondere Metalle und deren Verbindungen aus der Gruppe Platin, Rhodium, Palladium, Ruthenium und Iridium eingesetzt.
Vorzugsweise werden Platin und Platinverbindungen verwendet. Besonders bevorzugt werden solche Platinverbindungen, die in Polyorganosiloxanen löslich sind. Als lösliche Platinverbindungen können beispielsweise die Platin-Olefin-Komplexe der Formeln (PtCl_{2·}Olefin)₂ und H(PtCl₃·Olefin) verwendet werden, wobei bevorzugt Alkene mit 2 bis 8 Kohlenstoffatomen, wie Ethylen, Propylen, Isomere des Butens und Octens, oder Cycloalkene mit 5 bis 7 Kohlenstoffatomen, wie Cyclopenten, Cyclohexen und Cyclohepten, eingesetzt werden. Weitere lösliche Platin-Katalysatoren sind der Platin-Cyclopropan-Komplex der Formel (PtCl₂ C₃H₆)₂, die Umsetzungsprodukte von Hexachloroplatinsäure mit Alkoholen, Ethern und Aldehyden bzw. Mischungen derselben oder das Umsetzungsprodukt von Hexachloroplatinsäure mit Methylvinylcyclotetrasiloxan in Gegenwart von Natriumbicarbonat in ethanolischer Lösung. Besonders bevorzugt sind Komplexe des Platins mit Vinylsiloxanen, wie sym-Divinyltetramethyldisiloxan.

Es können auch durch Bestrahlung aktivierte Hydrosilylierungskatalysatoren eingesetzt werden, wie z.B. in WO2009/092762 beschrieben.

Der Hydrosilylierungskatalysator kann in jeder beliebigen Form eingesetzt werden, beispielsweise auch in Form von Hydrosilylierungskatalysator enthaltenden Mikrokapseln, oder Polyorganosiloxanpartikeln.

Der Gehalt an Hydrosilylierungskatalysatoren wird vorzugsweise so gewählt, dass die Siliconzusammensetzung SZ einen Pt-Gehalt von 0,1 bis 250 Gew.-ppm, insbesondere von 0,5 bis 180 Gew.-ppm besitzt.

Bei Anwesenheit von Hydrosilylierungskatalysatoren ist die Verwendung von Inhibitoren bevorzugt. Beispiele gebräuchlicher Inhibitoren sind acetylenische Alkohole, wie 1-Ethinyl-1-cyclohexanol, 2-Methyl-3-butin-2-ol und 3,5-Dimethyl-1-hexin-3-ol, 3-Methyl-1-dodecin-3-ol, Polymethylvinylcyclosiloxane, wie beispielsweise 1,3,5,7-Tetravinyltetramethyltetracyclosiloxan, niedermolekulare Siliconoele enthaltend (CH₃)(CHR=CH)SiO_{2/2}-Gruppen und gegebenenfalls R₂(CHR=CH)SiO_{1/2}-Endgruppen, wie beispielsweise Divinyltetramethyldisiloxan, Tetravinyldimethyldisiloxan, Trialkylcyanurate, Alkylmaleate, wie beispielsweise Diallylmaleate, Dimethylmaleat und Diethylmaleat, Alkylfumarate, wie beispielsweise Diallylfumarat und Diethylfumarat, organische Hydroperoxide, wie beispielsweise Cumolhydroperoxid, tert.-Butylhydroperoxid und Pinanhydroperoxid, organische Peroxide, organische Sulfoxide, organische Amine, Diamine und Amide, Phosphane und Phosphite, Nitrile, Triazole, Diaziridine und Oxime. Die Wirkung dieser Inhibitoren hängt von ihrer chemischen Struktur ab, so dass der geeignete Inhibitor und der Gehalt in der Siliconzusammensetzung SZ individuell bestimmt werden muss. Der Gehalt an Inhibitoren in der Siliconzusammensetzung SZ beträgt vorzugsweise 0 bis 50 000 Gew.-ppm, besonders bevorzugt 20 bis 2000 Gew.-ppm, insbesondere 100 bis 1000 Gew.-ppm.

Bei Verwendung von Photoinitiatoren, Peroxiden oder Azoverbindungen als Vernetzer V ist kein Katalysator und Inhibitor notwendig.

Werden zur Vernetzung Photoinitiatoren und/oder Photosensibilisatoren verwendet, so werden diese in Mengen von 0,1-10 Gew.-%, bevorzugt 0,5-5 Gew.-% und besonders bevorzugt 1-4 Gew.-% bezogen auf das Siliconelastomer S1 eingesetzt.

Werden zur Vernetzung Azoverbindungen oder Peroxide verwendet, so werden diese in Mengen von 0,1-10 Gew.-%, bevorzugt 0,5-5 Gew.-% und besonders bevorzugt 1-4 Gew.-% bezogen auf das Siliconelastomer S1 eingesetzt.

Die Siliconzusammensetzung SZ enthält zusätzlich zu Alkenylgruppen enthaltendem thermoplastischem Siliconelastomer S1 auch Alkenylgruppen-haltige Siliconverbindung S2. Vorzugsweise enthält die Siliconzusammensetzung SZ pro 100 Gewichtsteilen Siliconelastomer S1 höchstens 100 Gewichtsteile, besonders bevorzugt höchstens 50 Gewichtsteile, insbesondere höchstens 20 Gewichtsteile Siliconverbindung S2.

Die Alkenylgruppen **R¹** sind einer Anlagerungsreaktion mit einem SiH-funktionellen Vernetzer V zugänglich. Üblicherweise werden Alkenylgruppen mit 2 bis 6 Kohlenstoffatomen, wie Vinyl, Allyl, Methallyl, 1-Propenyl, 5-Hexenyl, Ethinyl, Butadienyl, Hexadienyl, Cyclopentenyl, Cyclopentadienyl, Cyclohexenyl, vorzugsweise Vinyl und Allyl, verwendet.

Organische zweiwertige Gruppen, über die die Alkenylgruppen **R¹** an Silicium der Polymerkette gebunden sein können, bestehen beispielsweise aus Oxyalkyleneinheiten, wie solche der allgemeinen Formel (VI)

-(O)_{c}[(CH2)_{d}O]ₑ- (VI),

in der
**c** die Werte 0 oder 1, insbesondere 0,
**d** Werte von 1 bis 4, insbesondere 1 oder 2 und
**e** Werte von 1 bis 20, insbesondere von 1 bis 5 bedeuten.
Die Oxyalkyleneinheiten der allgemeinen Formel (VI) sind links an ein Siliciumatom gebunden.

Die Reste **R¹** können in jeder Position der Polymerkette, insbesondere an den endständigen Siliciumatomen, gebunden sein.

Beispiele für unsubstituierte Reste **R²** sind Alkylreste, wie der Methyl-, Ethyl-, n-Propyl-, iso-Propyl-, n-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest; Alkenylreste, wie der Vinyl-, Allyl-, n-5-Hexenyl-, 4-Vinylcyclohexyl- und der 3-Norbornenylrest; Cycloalkylreste, wie Cyclopentyl-, Cyclohexyl-, 4-Ethylcyclohexyl-, Cycloheptylreste, Norbornylreste und Methylcyclohexylreste; Arylreste, wie der Phenyl-, Biphenylyl-, Naphthylrest; Alkarylreste, wie o-, m-, p-Tolylreste und Ethylphenylreste; Aralkylreste, wie der Benzylrest, der alpha- und der β-Phenylethylrest.

Beispiele für substituierte Kohlenwasserstoffreste als Reste **R²** sind halogenierte Kohlenwasserstoffe, wie der Chlormethyl-, 3-Chlorpropyl-, 3-Brompropyl, 3,3,3-Trifluorpropyl und 5,5,5,4,4,3,3-Heptafluorpentylrest sowie der Chlorphenyl-, Dichlorphenyl- und Trifluortolylrest.

**R²** weist vorzugsweise 1 bis 6 Kohlenstoffatome auf. Insbesondere bevorzugt sind Methyl und Phenyl.

Siliconverbindung S2 kann auch eine Mischung verschiedener Alkenylgruppen enthaltender Polyorganosiloxane sein, die sich beispielsweise im Alkenylgruppengehalt, der Art der Alkenylgruppe oder strukturell unterscheiden.

Die Struktur der Siliconverbindung S2 kann lineare, cyclisch oder auch verzweigt sein. Der Gehalt an zu verzweigten Polyorganosiloxanen führenden tri- und/oder tetrafunktionellen Einheiten ist typischerweise sehr gering, vorzugsweise höchstens 20 Mol-%, insbesondere höchstens 0,1 Mol-%.

Siliconverbindung S2 kann ein Siliconharz sein. Dabei liegt **(a+b)** bevorzugt im Bereich von 2,1 bis 2,5, insbesondere von 2,2 bis 2,4.

Besonders bevorzugt handelt es sich bei Siliconverbindung S2 um Organopolysiloxanharze S2, die zu mindestens 90 mol-% aus R⁴₃SiO_{1/2} (M)- und SiO_{4/2} (Q)-Einheiten bestehen, wobei **R⁴** die Bedeutungen von **R¹** oder **R²** aufweist, wobei mindestens zwei, insbesondere mindestens drei der Reste **R⁴** pro Molekül **R¹** bedeuten. Diese Harze werden auch als MQ-Harze bezeichnet. Das molare Verhältnis von M- zu Q-Einheiten liegt vorzugsweise im Bereich von 0,5 bis 2,0, besonders bevorzugt im Bereich von 0,6 bis 1,0. Diese Siliconharze können außerdem bis zu 10 Gew.-% freie Hydroxy- oder Alkoxygruppen enthalten.

Vorzugsweise haben diese Organopolysiloxanharze S2 bei 25°C eine Viskosität größer 1000 mPas oder sind Feststoffe. Das mit Gelpermeationschromatografie bestimmte gewichtsmittlere Molekulargewicht (bezogen auf einen Polystyrolstandard) dieser Harze beträgt bevorzugt mindestens 200, besonders bevorzugt mindestens 1000 g/mol und bevorzugt höchstens 200 000, besonders bevorzugt höchstens 20 000 g/mol.

Siliconverbindung S2 kann eine an der Oberfläche mit Alkenylgruppen **R¹** belegte Kieselsäure sein. Dabei liegt **(a+b)** bevorzugt im Bereich von 0,01 bis 0,3 insbesondere von 0,05 bis 0,2. Die Kieselsäure ist vorzugsweise gefällte Kieselsäure, insbesondere pyrogene Kieselsäure. Die Kieselsäure weist bevorzugt eine mittlere Primärteilchen-Partikelgröße kleiner als 100 nm, insbesondere eine mittlere Primärteilchen-Partikelgröße von 5 bis 50 nm auf, wobei diese Primärteilchen meist nicht isoliert in der Kieselsäure existieren, sondern Bestandteile größerer Aggregate (Definition nach DIN 53206) sind, die einen Durchmessern von 100 bis 1000 nm aufweisen.

Ferner weist die Kieselsäure eine spezifischen Oberfläche von 10 bis 400 m²/g (gemessen nach der BET Methode nach DIN 66131 und 66132) auf, wobei die Kieselsäure eine fraktale Dimension der Masse Dₘ von kleiner oder gleich als 2,8, bevorzugt gleich oder kleiner 2,7, besonders bevorzugt von 2,4 bis 2,6, und eine Dichte an Oberflächen-Silanolgruppen SiOH von kleiner als 1,5 SiOH/nm², bevorzugt von kleiner als 0,5 SiOH/nm², besonders bevorzugt von kleiner als 0,25 SiOH/nm² aufweist.

Die Kieselsäure weist vorzugsweise einen insbesondere durch die Belegung der Oberfläche mit Alkenylgruppen **R¹** verursachten Kohlenstoffgehalt von 0,1 bis 10 Gew.-%, insbesondere 0,3 bis 5 Gew.-% auf.

Besonders bevorzugt als Siliconverbindung S2 sind Vinylgruppen enthaltende Polydimethylsiloxane, deren Moleküle der allgemeinen Formel (VII)

(ViMe₂SiO_{1/2})₂(ViMeSiO)ₚ(Me₂SiO)_{q} (VII),

entsprechen, wobei die nichtnegativen ganzen Zahlen **p** und **q** folgende Relationen erfüllen: p≥0, 50<**(p+q)**<20000, vorzugsweise 100<(**p+q**)<1000, und 0<(**p**+1)/(**p+q**)<0,2. Insbesondere ist **p** = 0.

Die Viskosität der Siliconverbindung S2 der allgemeinen Formel (V) beträgt bei 25°C vorzugsweise 0,5 bis 500 Pa·s, insbesondere 1 bis 100 Pa·s, ganz besonders bevorzugt 1 bis 50 Pa·s.

Beispielsweise ist q=120 und p=0 oder q=150 und p=0.

Enthält die Siliconzusammensetzung SZ eine alkenylgruppenhaltige Siliconverbindung S2, so ist der Anteil von S2 0,5-40 Gew.-%, besonders bevorzugt 2-30 Gew.-% bezogen auf SZ.

Die Siliconzusammensetzung SZ kann als Additiv A mindestens einen Füllstoff F enthalten. Nicht verstärkende Füllstoffe F mit einer BET-Oberfläche von bis zu 50 m²/g, sind beispielsweise Quarz, Diatomeenerde, Calciumsilikat, Zirkoniumsilikat, Zeolithe, Metalloxidpulver, wie Aluminium-, Titan-, Eisen-, oder Zinkoxide bzw. deren Mischoxide, Bariumsulfat, Calciumcarbonat, Gips, Siliciumnitrid, Siliciumcarbid, Bornitrid, Glas- und Kunststoffpulver. Eine Auflistung weiterer Füllstoffe in Partikelform findet sich in EP 1940940. Verstärkende Füllstoffe, also Füllstoffe mit einer BET-Oberfläche von mindestens 50 m²/g, insbesondere 100 bis 400 m²/g sind beispielsweise pyrogen hergestellte Kieselsäure, gefällte Kieselsäure, Aluminiumhydroxid, Ruß, wie Furnace- und Acetylenruß und Silicium-Aluminium-Mischoxide großer BET-Oberfläche.
Die genannten Füllstoffe F können hydrophobiert sein, beispielsweise durch die Behandlung mit Organosilanen, Organosilazanen bzw. -siloxanen oder durch Verätherung von Hydroxylgruppen zu Alkoxygruppen. Es kann eine Art von Füllstoff F, es kann auch ein Gemisch von mindestens zwei Füllstoffen F eingesetzt werden.

Vorzugsweise enthalten die Siliconzusammensetzung SZ mindestens 3 Gew.-%, besonders bevorzugt mindestens 5 Gew.-%, insbesondere mindestens 10 Gew.-% und höchstens 40 Gew.-% Füllstoffanteil F.

Die Siliconzusammensetzung SZ kann wahlweise als weiteren Bestandteil A mögliche Additve zu einem Anteil von 0 bis 70 Gew.-%, vorzugsweise 0,0001 bis 40 Gew.-%, enthalten. Diese Zusätze können beispielsweise harzartige Polyorganosiloxane, die von der Alkenylgruppen-haltigen Siliconverbindung S2 und SiH-Organosiliciumverbindung verschieden sind, Haftvermittler, Pigmente, Farbstoffe, Weichmacher, organische Polymere, Hitzestabilisatoren, Inhibitoren, Fungizide oder Bakterizide, wie Methylisothiazolone oder Benzisothiazolone, Vernetzungshilfsmittel, wie Triallylisocyanurat, Verlaufshilfsmittel, oberflächenaktive Substanzen, Haftvermittler, Lichtschutzmittel wie UV-Absorber und/oder Radikalfänger, Thixotropiermittel sein.
Das Lösungsmittel L1 ist leichter entfernbar aus der im ersten Schritt hergestellten Lösung oder Suspension aus Siliconzusammensetzung SZ als das Lösungsmittel L2. Die Entfernbarkeit bezieht sich insbesondere auf leichteres Verdampfen oder Extrahieren.

Der Begriff Lösungsmittel L1 umfasst alle organischen und anorganischen Verbindungen, welche Siliconzusammensetzung SZ bei den meisten Temperaturen auflösen. Dieser Begriff umfasst bevorzugt alle Verbindungen, welche bei ansonsten gleichen Bedingungen, wie z.B. Druck und Temperatur, die Siliconzusammensetzung SZ zu einem höheren Anteil lösen können wie das Lösungsmittel L2.

D.h. die maximal erreichbare Konzentration der Siliconzusammensetzung SZ im Lösungsmittel L1 ist höher als die maximal erreichbare Konzentration der Siliconzusammensetzung SZ im Lösungsmittel L2.

Die maximal erreichbare Konzentration der Siliconzusammensetzung SZ ist dabei bevorzugt um den Faktor 2, besonders bevorzugt um den Faktor 5, ganz besonders um den Faktor 10 und insbesondere um den Faktor 100 im Lösungsmittel L1 höher als im Lösungsmittel L2. Die maximal erreichbare Konzentration der Siliconzusammensetzung SZ bezieht sich vorzugsweise auf 20°C und 1 bar.

Der Begriff Lösungsmittel L1 umfasst dabei zusätzlich auch höhermolekulare Verbindungen, wie z.B. flüssige Polymere.

Je nach Lösungsmittel L1 und Siliconzusammensetzung SZ können auch erhöhte Drücke zur Löslichkeit beitragen.

Bevorzugt sind Lösungsmittel L1, in denen sich die siliconhaltigen Polymere bei 20°C und 1 bar zu mindestens 10 Gew.-%, besonders bevorzugt zu mindestens 15 Gew.-% und insbesondere zu mindestens 20 Gew.-% lösen.

Je nach Lösungsmittel und Polymer können auch erhöhte Drücke zur geringen Löslichkeit beitragen.

Der Begriff Lösungsmittel L2 umfasst dabei zusätzlich auch höhermolekulare Verbindungen, wie z.B. flüssige Polymere.

Bevorzugt sind Lösungsmittel L2, in denen sich die Siliconzusammensetzung SZ bei 20°C und 1 bar zu höchstens 20 Gew.-%, besonders bevorzugt zu höchstens 10 Gew.-% und insbesondere zu höchstens 1 Gew.-% löst.

Das Lösungsmittel L1 und das Lösungsmittel L2 können jeweils aus einem oder mehreren Bestandteilen bestehen.

Vorzugsweise weist das Lösungsmittel L1 bzw. alle Bestandteile des Lösungsmittels L1 bei 20°C und 1 bar einen höheren Dampfdruck auf als das Lösungsmittel L2 bzw. alle Bestandteile des Lösungsmittels L2.

Vorzugsweise liegt der Siedepunkt des Lösungsmittels L1 bzw. aller Bestandteile des Lösungsmittels L1 bei 1 bar mindestens 30°, besonders bevorzugt mindestens 40°, insbesondere mindestens 50° tiefer als der Siedepunkt des Lösungsmittel L2 bzw. aller Bestandteile des Lösungsmittels L2.

Wenn im ersten Schritt eine Suspension der Siliconzusammensetzung SZ in einem Gemisch aus Lösungsmittel L1 und Lösungsmittel L2 entsteht, deutet dies auf eine beginnende Phasenseparation hin, welche durch Rühren teilweise unterbunden werden kann.

Der Übergang der Lösung oder Suspension zum Siliconformkörper kann auf unterschiedliche Arten erfolgen. Falls z.B. eine homogene Lösung von Siliconzusammensetzung SZ vorliegt, kann im dritten Schritt bei der Phasenseparation zuerst eine Suspension gebildet werden, aus welcher dann ein erster Gelkörper entsteht, der sich durch die weitere Entfernung des Lösungsmittels L1 bzw. Lösungmittels L2 zu einer stabilen Membran M aus Siliconzusammensetzung SZ umwandeln lässt.

Falls bereits im ersten Schritt eine Suspension vorliegt, kann im dritten Schritt bei der Phasenseparation die Gelstruktur aus der Suspension der Siliconzusammensetzung SZ entstehen. Dies ist in den meisten Fällen schneller als beim Start mit homogenen Lösungen von Siliconzusammensetzung SZ.

Vorzugsweise sind nach dem dritten Schritt höchstens 30 Gew.-%, besonders bevorzugt höchstens 20 Gew.-%, insbesondere höchstens 10 Gew.-% des im ersten Schritt eingesetzten Lösungsmittels L1 in den Phasen A und B vorhanden.

Das Lösungsmittel L1 kann im dritten Schritt durch alle technisch bekannten Möglichkeiten aus der Gießlösung entfernt werden. Bevorzugt ist die Entfernung des Lösungsmittels L1 durch Verdampfen oder Extrahieren.
Beispiele für bevorzugte technische Prozesse sind Verdampfen durch Konvektion, erzwungene Konvektion, Erhitzen oder verdampfen in feuchter Atmosphäre bzw. Extrahieren durch Lösungsmittelaustausch oder Auswaschen mit einem flüchtigen Lösungsmittel.

Die Methode muss dabei immer so gewählt werden, dass eine Herstellung der Membran in einem akzeptablen Zeitraum erfolgt, allerdings die Struktur auch ausgebildet werden kann.

Die Geschwindigkeit der Verdampfung wird vorzugsweise so gewählt, dass die flüssig-flüssig-Phasenseparation nicht unter thermodynamischen Gleichgewichtsbedingungen auftritt, da sonst keine porösen Strukturen entstehen.

Das Lösungsmittel L2 muss nicht immer inert sein. Gegebenenfalls ist Siliconzusammensetzung SZ in dem Lösungsmittel L2 quellbar. Bevorzugt sind Lösungsmittel L2, welche eine Adsorption für Siliconzusammensetzung SZ von bevorzugt nicht weniger als 10 Gew.-%, besonders bevorzugt nicht weniger als 50 Gew.-% besitzen.

Die passende Wahl des Lösungsmittels L2 ist wichtig, da dieses entscheidet, ob die Struktur nach der Phasenseparation erhalten bleibt oder nicht.

Das Lösungsmittel L2 kann im vierten Schritt auf alle dem Fachmann geläufigen Methoden Arten aus der Membran entfernt werden. Beispiele sind Extrahieren, Verdampfen, ein sukzessiver Lösungsmittelaustausch oder einfaches Auswaschen des Lösungsmittels L2.

Die Lösung oder Suspension von Siliconzusammensetzung SZ kann auf vielerlei Wegen hergestellt werden. In einer bevorzugten Ausführungsform der Erfindung wird Siliconzusammensetzung SZ in dem Lösungsmittel L1 gelöst und das Lösungsmittel L2 hinzugegeben. In einer besonders bevorzugten Ausführungsform der Erfindung wird die Siliconzusammensetzung SZ in einem Lösungsmittelgemisch aus L1 und L2 gelöst.

Die Löslichkeiten der Siliconzusammensetzung SZ in Lösungsmittel L1 sind dem Fachmann geläufig, bzw. falls keine Angaben gefunden werden, durch Löslichkeitsuntersuchungen leicht zu bestimmen.
Das dazu passende Lösungsmittel L2 kann in wenigen Versuchen schnell herausgefunden werden, z.B. in einfachen Trübungstitrationen. Dazu wird einer Lösung von Siliconzusammensetzung SZ solange ein zweites Lösungsmittel hinzugegeben, bis ein Ausfallen der Siliconzusammensetzung SZ beobachtet wird.

Das sich die Löslichkeiten von Siliconzusammensetzung SZ stark unterscheiden, können Lösungsmittel L1 für eine bestimmte Siliconzusammensetzung SZ gleichzeitig Lösungsmittel L2 für eine andere Siliconzusammensetzung SZ sein.

Bevorzugte organische Lösungsmittel L1 bzw. Lösungsmittel L2 sind Kohlenwasserstoffe, halogenierte Kohlenwasserstoffe, Ether, Alkohole, Aldehyde, Ketone, Säuren, Anhydride, Ester, N-haltige Lösungsmittel und S-haltige Lösungsmittel.
Beispiele für gängige Kohlenwasserstoffe sind Pentan, Hexan, Dimetyhlbutan, Heptan, Hex-1-en, Hexa-1,5-dien, Cyclohexan, Terpentin, Benzol, Isopropylbenzol, Xylol, Toluol, Waschbenzin, Naphthalin, sowie Terahydronaphthalin. Beispiele für gängige halogenierte Kohlenwasserstoffe sind Fluoroform, Perfluorheptan, Methylenchlorid, Chloroform, Tetrachlorkohlenstoff, 1,2-Dichlorethan, 1,1,1-Trichlorethan, Tetrachlorethen, Trichlorethen, Pentylchlorid, Bromoform, 1,2-Dibromethan, Methyleniodid, Fluorbenzol, Chlorbenzol sowie 1,2-Dichlorbenzol. Beispiele für gängige Ether sind Diethylether, Butylethylether, Anisol, Diphenylether, Ethylenoxid, Tetrahydrofuran, Furan, Triethylenglykol sowie 1,4-Dioxan.

Beispiele für gängige Alkohole sind Methanol, Ethanol, Propanol, Butanol, Octanol, Cyclohexanol, Benzylalkohol, Ethylenglykol, Ethylenglycolmonomethylether, Propylenglycol, Butylglycol, Glycerin, Phenol sowie m-Kresol. Beispiele für gängige Aldehyde sind Acetaldehyd und Butyralaldehyd. Beispiele für gängige Ketone sind Aceton, Diisobutylketon, Butan-2-on, Cyclohexanon sowie Acetophenon. Gängige Beispiele für Säuren sind Ameisensäure und Essigsäure. Gängige Beispiel für Anhydride sind Essigsäureanhydrid und Maleinsäureanhydrid. Gängige Beispiele von Estern sind Essigsäuremetyhlester, Essigsäureethylester, Essigsäurebutylester, Essigsäurephenylester, Glyceroltriacetat, Oxalsäurediethylester, Dioctylsebacat, Benzoesäuremethylester, Phthalsäuredibutylester, DBE^{®} (DuPont de nemours) sowie Phosphorsäuretrikresylester. Gängige Beispiele von stickstoffhaltigen Lösungsmittel sind Nitromethan, Nitrobenzol, Butyronitril, Acetonitril, Benzonitril, Malononitril, Hexylamin, Aminoethanol, N,N-Diethylaminoethanol, Anilin, Pyridin, N,N-Dimethylanilin, N,N-Dimethylformamid, N-Methylpiperazin sowie 3-Hydroxypropionitril. Gängige Beispiele für schwefelhaltige Lösungsmittel sind Schwefelkohlenstoff, Methanthiol, Dimethylsulfon, Dimethylsulfoxid sowie Thiophen. Gängige Beispiele für anorganische Lösungsmittel sind Wasser, Ammoniak, Hydrazin, Schwefeldioxid, Siliciumtetrachlorid und Titantetrachlorid.

Als höhermolekulare Lösungsmittel L1 bzw. Lösungsmittel L2 können alle nicht reaktiven Polymere eingesetzt werden. Bevorzugt werden bei der Verarbeitungstemperatur flüssige, in technischen Mengen verfügbare nicht reaktive Polymere eingesetzt.

Beispiele für derartige Lösungsmittel L1 bzw. Lösungsmittel L2 umfassen u.a. Polydimethylsiloxane mit nicht reaktiven Endgruppen, beispielsweise Trimethylsilyendgruppen tragende lineare Silicone, Phenylsiloxane, cyklische Siloxane, wie z.B. Cyclohexadimethylsiloxan oder Cyclodecadimethylsiloxan. Weitere Beispiele derartiger Lösungsmittel L1 bzw. Lösungsmittel L2 umfassen Polypropylenoxide, Polyethylenoxide, Polyamide, Polyvinylacetate, Polyisobutene, Polyacrylate, Polybutadiene, Polyisoprene und Copolymere der aufgelisteten Stoffgruppen.

Besonders bevorzugte Lösungsmittel L1 sind für die thermoplastischen Siliconelastomere S1 in der Siliconzusammensetzung SZ Alkohole, z.B. Isopropanol oder Ether, insbesondere THF.
Besonders bevorzugte Lösungsmittel L1 sind für die Siliconverbindung S2 in der Siliconzusammensetzung SZ z.B. Toluol, Xylol, Benzine (Sdp. höher 80 °C), Pentan, Hexan, THF oder Isopropanol.
Besonders bevorzugte Lösungsmittel L2 sind für Siliconzusammensetzung SZ z.B. Ethylenglykol, Diethylenglykol, Triethylenglykol, Tetraethylenglykol, Propylenglykol, Dipropylenglykol, Ethylenglycoldimethylether, Monomethyldiethylenglykol, Dimethyldiethylenglykol, Monomethyltriethylenglycol, Dimethyltriethylenglykol, Diethylenglycolbutylether, Polyethylenglykol, Polypropylenglykol, niedermolekulare Polyglykole wie Polyethylenglykol 200, Polyethylenglykol 400, Polypropylenglykol 425 und Polypropylenglykol 725, Polyethylenglycolmonomethylether, Polyethyelnglycoldimethylether, DBE^{®}, Glycerin, NMP oder DMSO.

Die Siliconzusammensetzung SZ kann ebenfalls in ternären Lösungsmittelgemischen gelöst werden. Ein gängiges Beispiel für ein tertiäres Lösungsmittelgemisch kann z.B. eine Mischung aus einem Lösungsmittel L1 und zwei Lösungsmitteln L2 sein.
Ein Beispiel für eine ternäre Lösungsmittel-Mischung besteht Isopropanol (Lösungsmittel L1), N-Methylpiperazin (Lösungsmittel L2) und Dimethylformamid (Lösungsmittel L2). Die Siliconzusammensetzung SZ kann ebenfalls in Lösungsmittelgemischen aus mehr als einem Lösungsmittel L1 und mehr als zwei Lösungsmitteln L2 gelöst werden.

Die Mengenverhältnisse zwischen Lösungsmittel L1 und Lösungsmittel L2 können in einem weiten Bereich variieren. Vorzugsweise werden im ersten Schritt auf 100 Gewichtsteile Lösungsmittel L1 mindestens 2, insbesondere mindestens 10 Gewichtsteile Lösungsmittel L2 und höchstens 5000, insbesondere höchstens 1000 Gewichtsteile Lösungsmittel L2 eingesetzt.

Bevorzugt enthält die im ersten Schritt hergestellte Lösung oder Suspension bis zu 95 Gew.-%, weiterhin bevorzugt bis zu 80 Gew.-%, besonders bevorzugt bis zu 60 Gew.-% an Lösungsmittel L1 und Lösungsmittel L2.

Bevorzugt enthält die im ersten Schritt hergestellte Lösung oder Suspension mindestens 1 Gew.-%, besonders bevorzugt mindestens 10 Gew.-%, insbesondere mindestens 15 Gew.-% und höchstens 70 Gew.-%, besonders bevorzugt höchstens 40 Gew.-%, insbesondere höchstens 25 Gew.-% an Siliconzusammensetzung SZ.

Vorzugsweise wird die Lösung oder Suspension von Siliconzusammensetzung SZ im zweiten Schritt bei Temperaturen von mindestens 0°C, besonders bevorzugt mindestens 10°C, insbesondere mindestens 20°C und höchstens 60°C, besonders bevorzugt höchstens 50_{°}C in eine Form gebracht.

In einer Ausführungsform der Erfindung werden der Lösung oder Suspension im ersten und/oder zweiten Schritt weitere Additive A hinzugegeben. Typische Additive sind anorganische Salze und Polymere. Gängige anorganische Salze sind LiF, NaF, KF, LiCl, NaCl, KCl, MgCl₂, CaCl₂, ZnCl₂ und CdCl₂. Weitere typische Additive A sind geeignete Emulgatoren, die in die Lösung oder Suspension eingearbeitet werden wie beispielsweise Polydimethylsiloxane mit Polyetheroxy-, wie Ethylenoxy- oder Propylenoxy-, Alkoxy- und Ammoniumgruppen.

Die zugegebenen Additive A können nach der Herstellung in der Membran verbleiben oder nach dem dritten, vierten oder fünften Schritt extrahiert bzw. mit anderen Lösungsmitteln ausgewaschen werden.

Dabei können auch Gemische von unterschiedlichen Additiven A in die Lösung oder Suspension mit eingearbeitet werden. Die Konzentration der Additive A in der Polymerlösung beträgt vorzugsweise mindestens 0,01 Gew.-%, besonders bevorzugt mindestens 0,1 Gew.-%, insbesondere mindestens 1 Gew.-% und höchstens 15 Gew.-%, besonders bevorzugt höchstens 10 Gew.-%. So wird in einer besonders bevorzugten Ausführungsform der Erfindung in die Lösung oder Suspension 1 bis 3 Gew.-% LiCl und 2 bis 5 Gew.-% NaCl gegeben. In einer weiteren besonders bevorzugten Ausführungsform werden 0,5 bis 10 Gew.-% Siliconoligomere, die durch Polyetherketten seiten- und/oder endständig modifiziert sind, als Additive A in die Lösung oder Suspension gegeben.
Die Lösungen oder Suspensionen können zudem die in Formulierungen üblichen Additive und Zusätze enthalten. Zu nennen wären hier u.a. Verlaufshilfsmittel, oberflächenaktive Substanzen, Haftvermittler, Lichtschutzmittel wie UV-Absorber und/oder Radikalfänger, Thixotropiermittel sowie weitere Fest-und Füllstoffe. Zur Erzeugung der jeweils gewünschten Eigenschaftsprofile der Membranen sind derartige Zusätze bevorzugt.

Bevorzugte geometrische Ausführungsformen der herstellbaren dünnen porösen Membranen sind Folien, Schläuche, Fasern, Hohlfasern, Matten, wobei die geometrische Form an keinerlei feste Formen gebunden ist, sondern weites gehend von den verwendeten Substraten abhängt.

Zur Herstellung der Membranen werden die Lösungen oder Suspensionen der Siliconzusammensetzung SZ im zweiten Schritt vorzugsweise auf ein Substrat aufgebracht. Die auf Substrate aufgebrachten Lösungen oder Suspensionen werden dabei bevorzugt zu Folien weiterverarbeitet.

Die Substrate enthalten vorzugsweise ein oder mehrere Stoffe aus der Gruppe umfassend Metalle, Metalloxide, Polymere oder Glas. Die Substrate sind dabei grundsätzlich an keine geometrische Form gebunden. Bevorzugt ist dabei allerdings der Einsatz von Substraten in Form von Platten, Folien, textile Flächensubstrate, gewobenen oder vorzugweise nichtgewobenen Netzen oder besonders bevorzugt in Form von nichtgewobenen Vliesen eingesetzt werden.

Substrate auf Basis von Polymeren enthalten beispielsweise Polyamide, Polyimide, Polyetherimide, Polycarbonate, Polybenzimidazole, Polyethersulfone, Polyester, Polysulfone, Polytetrafluorethylene, Polyurethane, Polyvinylchloride, Celluloseacetate, Polyvinylidenfluoride, Polyetherglykole, Polyethylenterephthalat (PET), Polyaryletherketone, Polyacrylnitril, Polymethylmethacrylate, Polyphenylenoxide, Polycarbonate, Polyethylene oder Polypropylene. Bevorzugt sind hierbei Polymere mit einer Glasübergangstemperatur Tg von mindestens 80°C. Substrate auf Basis von Glas enthalten beispielsweise Quarzglas, Bleiglas, Floatglas oder Kalk-Natron-Glas.

Bevorzugte Netz- oder Vlies-Substrate enthalten Glas-, Carbon-, Aramid-, Polyamid-, Polyester-, Polyethylene-, Polypropylene-, Polyethylene/Polypropylene-Copolymer- oder Polyethylenterephthalat-Fasern.

Die Schichtdicke der Substrate beträgt vorzugsweise ≥ 1 µm, besonders bevorzugt ≥ 50 µm, ganz besonders bevorzugt ≥ 100 µm und vorzugsweise ≤ 2 mm, besonders bevorzugt ≤ 600 µm, ganz besonders bevorzugt ≤ 400 µm. Am meisten bevorzugte Bereiche für die Schichtdicke der Substrate sind die aus den vorgenannten Werten formulierbaren Bereiche.

Die Dicke der porösen Membranen aus Siliconzusammensetzung SZ wird vornehmlich durch die Menge an Lösung oder Suspension bestimmt. Da bei dem erfindungsgemäßen Prozess bevorzugt ein Verdampfungs- oder Extraktionsschritt stattfindet, sind dünnere Membranen bevorzugt.

Alle technisch bekannten Formen des Auftrages der Lösung oder Suspension der Siliconzusammensetzung SZ auf Substrate können für die Herstellung der porösen Membranen eingesetzt werden. Das Auftragen der Lösung oder Suspension auf das Substrat erfolgt dabei bevorzugt mittels eines Rakels, durch Meniskusbeschichtung, Gießen, Sprühen, Tauchen, Siebdruck, Tiefdruck, Transferbeschichtung, Gravurbeschichtung oder Spinon-Disk. Die so aufgetragenen Lösungen oder Suspensionen haben Filmdicken von vorzugsweise ≥ 10 µm, besonders bevorzugt ≥ 80 µm und vorzugsweise ≤ 10.000 µm, besonders bevorzugt ≤ 5.000 µm, insbesondere ≤ 1000 µm hergestellt. Am meisten bevorzugte Bereiche für die Filmdicken sind die aus den vorgenannten Werten formulierbaren Bereiche.

Vorzugsweise werden aus den in Form gebrachten Lösungen oder Suspensionen im dritten Schritt das Lösungsmittel L1 und vorzugsweise danach im vierten Schritt das Lösungsmittel L2 und Reste von Lösungsmittel L1 durch Verdampfen entfernt.
Das Verdampfen erfolgt vorzugsweise bei Temperaturen von mindestens 10°C, besonders bevorzugt mindestens 20°C und höchstens 100°C, besonders bevorzugt höchstens 70°C.
Das Verdampfen kann bei beliebigen Drücken durchgeführt werden, wie z.B. bei Unterdruck, bei Überdruck oder bei Normaldruck.
Das Verdampfen kann ebenfalls unter definierten feuchte-Bedingungen stattfinden. Je nach Temperatur sind relative Feuchten im Bereich von 0,5 bis 99 % besonders bevorzugt.
Wie bereits erwähnt, kann der Verdampfungsschritt auch unter definierten Lösungsmittelatmosphären, z.B. H₂O-Dampf AlkoholDampf, erfolgen. Der Sättigungsgehalt der Atmosphäre kann dabei in einem weiten Bereich variiert werden, z.B. zwischen 0 % (trockene Atmosphäre) bis 100 % (vollständige Sättigung bei der Prozesstemperatur). Damit lässt sich die Verdampfungsgeschwindigkeit des Lösungsmittels L1 bzw. die Aufnahme eines Lösungsmittels L1 bzw. Lösungsmittels L2 aus der Atmosphäre, in einem weiten Bereich variieren.
Die bevorzugte Dauer des Verdampfens kann für das jeweilige System in wenigen Versuchen ermittelt werden. Bevorzugt beträgt das Verdampfen mindestens 0,1 Sekunden bis mehrere Stunden. Die Angabe einer genauen Verdampfungszeit kann nicht erfolgen, da die Bestimmung für jedes System und für jede Lösung oder Suspension individuell erfolgen muss.

Sowohl die Verdampfungszeit als auch die Verdampfungsbedingungen beeinflussen die porösen Strukturen im Hinblick auf Porenart, Porengröße und Gesamtporosität.

In einer ebenfalls bevorzugten Ausführungsform der Erfindung wird in dem vierten Schritt das Lösungsmittel L2 und Reste von Lösungsmittel L1 durch Extraktion entfernt.
Die Extraktion erfolgt dabei vorzugsweise mit einem weiteren Lösungsmittel, welche die sich ausgebildete poröse Struktur nicht zerstört, aber gut mischbar mit dem Lösungsmittel L2 ist. Besonders bevorzugt ist die Verwendung von Wasser als Extraktionsmittel. Die Extraktion findet bevorzugt bei Temperaturen zwischen 20 °C und 100 °C statt. Die bevorzugte Dauer der Extraktion kann für das jeweilige System in wenigen Versuchen ermittelt werden. Bevorzugt beträgt die Dauer der Extraktion mindestens 1 Sekunde bis mehrere Stunden. Dabei kann der Vorgang auch mehrmals wiederholt werden.

Im vierten Schritt werden a) das Lösungsmittel L2 und Reste des Lösungsmittels L1 entfernt und b) Siliconzusammensetzung SZ einer Vernetzung unterworfen. Die zeitliche Reihenfolge ist dabei beliebig, beide Teilschritte a) und b) können nacheinander oder gleichzeitig durchgeführt werden. Vorzugsweise erfolgt zuerst a) die Entfernung von Lösungsmittel L2 und Resten des Lösungsmittels L1 und danach b) die Vernetzung der Siliconzusammensetzung SZ.
Werden zur Vernetzung der Siliconzusammensetzung SZ SiH-Organosiliciumverbindung eingesetzt und Hydrosilylierungskatalysator verwendet, so erfolgt die Vernetzung vorzugsweise thermisch, vorzugsweise bei 30 bis 250°C, bevorzugt bei mindestens 50°C, insbesondere bei mindestens 100°C, bevorzugt bei 120-210°C. Werden UV-schaltbare Hydrosilylierungskatalysatoren eingesetzt, so erfolgt die Vernetzung durch Bestrahlung mit Licht der Wellenlänge 230-400 nm bevorzugt mindestens 1 Sekunde, besonders bevorzugt mindestens 5 Sekunden und bevorzugt höchstens 500 Sekunden, besonders bevorzugt höchstens 240 Sekunden.

Erfolgt die Vernetzung der Siliconzusammensetzung SZ mit Photoinitiatoren, so dauert die Bestrahlung der Siliconzusammensetzung SZ mit Licht bevorzugt mindestens 1 Sekunde, besonders bevorzugt mindestens 5 Sekunden und bevorzugt höchstens 500 Sekunden, besonders bevorzugt höchstens 240 Sekunden.
Die Vernetzung mit Photoinitiatoren kann unter Schutzgas wie z. B. N₂ oder Ar oder unter Luft erfolgen.

Die bestrahlte Siliconzusammensetzung SZ wird nach der Bestrahlung mit Licht vorzugsweise höchstens 1 Stunde, besonders bevorzugt höchstens 10 Minuten, insbesondere höchstens 1 Minute erwärmt, um sie auszuhärten.
Besonders bevorzugt erfolgt die Vernetzung unter UV-Strahlung insbesondere bei 254 nm.

Werden zur Vernetzung der Siliconzusammensetzung SZ Peroxide verwendet, so erfolgt die Vernetzung bevorzugt thermisch, vorzugsweise bei 80 bis 300°C, besonders bevorzugt bei 100-200°C. Die Dauer der thermischen Vernetzung beträgt bevorzugt mindestens 1 Minute, besonders bevorzugt mindestens 5 Minuten und bevorzugt höchstens 2 Stunden, besonders bevorzugt höchstens 1 Stunde.
Die Vernetzung mit Peroxiden kann unter Schutzgas wie z. B. N₂ oder Ar oder unter Luft erfolgen.

Werden zur Vernetzung der Siliconzusammensetzung SZ Azoverbindungen verwendet, so erfolgt die Vernetzung bevorzugt thermisch, vorzugsweise bei 80 bis 300°C, besonders bevorzugt bei 100-200°C. Die Dauer der thermischen Vernetzung beträgt bevorzugt mindestens 1 Minute, besonders bevorzugt mindestens 5 Minuten und bevorzugt höchstens 2 Stunden, besonders bevorzugt höchstens 1 Stunde.
Die Vernetzung mit Azoverbindungen kann auch unter Bestrahlung mit UV-Licht erfolgen.
Die Vernetzung mit Azoverbindungen kann unter Schutzgas wie z. B. N₂ oder Ar oder unter Luft erfolgen.

Die Membranen können ebenfalls durch Bestrahlung mit Elektronenstrahlen vernetzt werden.

Die vernetzten Membranen zeichnen sich dadurch aus, das der Vernetzungsgrad > 50 %, bevorzugt > 70 % ist. Der Vernetzungsgrad der Anteil an Polymer, der sich organischen Lösemitteln, die Organopolysiloxan-Polyharnstoff-Copolymere normalerweise lösen, nicht mehr löst. Beispiele für solche Lösemittel sind THF oder iso-Propanol. Eine Methode den Vernetzungsgrad zu bestimmen, ist die Extraktion der Membran in Isopropanol bei 82 °C (1,013 bar (abs.)) für 1 h und anschließender gravimetrischer Bestimmung des unlöslichen Polymeranteils.

Die vernetzten Membranen zeichnen außerdem dadurch aus, dass deren Schrumpf in Feuchteatmosphäre gegenüber unvernetzten Membranen deutlich verbessert ist.

Bevorzugt ist die Produktion von Membranen aus Siliconzusammensetzung SZ mit einer gleichmäßigen Porenverteilung entlang des Querschnittes. Besonders bevorzugt ist die Herstellung mikroporöser Formkörper, mit Porengrößen von 0,1 µm bis 20 µm.

Die Membranen besitzen bevorzugt eine isotrope Porenverteilung.

Die nach dem Prozess hergestellten Membranen weisen im Allgemeinen eine poröse Struktur auf. Das freie Volumen beträgt vorzugsweise mindestens 5 Vol.-%, besonders bevorzugt mindestens 20 Vol.-%, insbesondere mindestens 35 Vol.-% und höchstens 90 Vol.-%, besonders bevorzugt höchstens 80 Vol.-%, insbesondere höchstens 75 Vol.-%.

Die Porosität der Membranen kann durch einen Reckprozess noch weiter erhöht werden. Die Membran kann monoaxial oder biaxial gereckt werden. Der Reckprozess findet bevorzugt vor dem Vernetzungsschritt statt.

Die so erhaltenen Membranen können z.B. direkt zur Trennung von Gemischen eingesetzt werden. Alternativ können die Membranen vom Substrat abgenommen werden und dann direkt ohne weiteren Träger verwendet werden oder gegebenenfalls auf andere Substrate, wie Vliese, Gewebe oder Folien aufgebracht werden, vorzugsweise bei erhöhten Temperaturen und unter Anwendung von Druck, beispielsweise in einer Heißpresse oder in einem Laminiergerät. Als Klebstoffe können z. B. Kleber auf Silicon-, Acrylat-, Epoxid-, Poly(urethan)- oder Poly(olefin)-Basis eingesetzt werden. Gegebenenfalls können Haftvermittler, wie z.B. Silane, eingesetzt werden um die Haftung der Membranen auf den Trägerstrukturen weiter zu verbessern.
Der Verbundwerkstoff kann auch dadurch hergestellt werden, dass die Membran mit der Trägerstruktur verschweißt wird.

In einer weiterhin bevorzugten Form der Erfindung werden die porösen Membranen durch Extrusion insbesondere nach dem vierten Schritt zu freitragenden Folien oder auf Substrate hergestellt.

Die fertig gestellten Membranen weisen Schichtdicken von vorzugsweise mindestens 10 µm, insbesondere mindestens 15 µm und vorzugsweise höchstens 2000 µm, insbesondere höchstens 1000 µm, ganz besonders bevorzugt höchstens 500 µm auf.

Die Oberflächen der Membranen können beschichtet sein.
Die Oberflächenbeschichtung bzw. die imprägnierten Oberflächen der Membranen hat vorzugsweise eine Dicke von mindestens 10 nm, besonders bevorzugt mindestens 100 nm, insbesondere mindestens 500 nm und vorzugsweise höchstens 500 µm, besonders bevorzugt höchstens 50 µm, insbesondere höchstens 10 µm. Für die Beschichtung eignen sich beispielsweise Polymere wie Polyamide, Polyimide, Polyetherimide, Polyether, Polycarbonate, Polybenzimidazole, Polyethersulfone, Polyester, Polysulfone, Polytetrafluorethylene, Polyurethane, Silicone, Polydimethylsilicone, Polymethylphenylsilicone, Polymethyloctylsilicone, Polymethylalkylsilicone, Polymethylarylsilicone, Polyvinylchloride, Polyetherglykole, Polyethylenterephthalat (PET), Polyaryletherketone, Polyacrylnitril, Polymethylmetaacrylate, Polyphenylenoxide, Polycarbonate, Polyethylene oder Polypropylene. Die Polymere können mit üblichen Methoden auf die Membran aufgebracht werden, beispielsweise mittels Laminieren, Sprühen, Rakeln oder Kleben. Vorzugsweise wird eine derartige Beschichtung auf Membranen mit Poren von 10 nm bis 10 µm aufgebracht.

Die Membranen eigenen sich als Beschichtung für dreidimensionale Gebilde um deren Oberflächeneigenschaften im Hinblick auf z.B. Schall- oder Wärmedämmung, Stoßdämpfung zu verändern. Die bei der Beschichtung erreichbare Atmungsaktivität kann dabei eine erwünschte zusätzliche Eigenschaft darstellen. Bevorzugt werden Gehäuse, Baustoffe oder Textilien mit den erfindungsgemäßen Membranen beschichtet oder laminiert.

Weiterhin können die porösen Membranen aus Siliconzusammensetzung SZ auch in Wundpflastern eingesetzt werden. Ebenfalls bevorzugt ist der Einsatz der porösen Membranen in Verpackungsmaterialien insbesondere bei der Verpackung von Lebensmitteln, die nach der Herstellung noch weitere Reifeprozesse durchlaufen. Die erfindungsgemäßen Membranen lassen sich bevorzugt ebenfalls in Bekleidungsstücken, wie z.B. in Jacken, Handschuhen, Mützen oder Schuhen, oder als Dachbahnen verwenden. Die Membranen sind dabei wasserabweisend und atmungsaktiv.

Die Membranen eignen sich zum Einsatz für alle gängigen Verfahren zur Trennung von Gemischen, wie Reverse Osmose, Gastrennung, Pervaporation, Nanofiltration, Ultrafiltration oder Mikrofiltration. Mit den Membranen können fest-fest, gasförmig-gasförmig, fest-gasförmig oder flüssig-gasförmig, insbesondere flüssig-flüssig und flüssig-fest Gemische getrennt werden.

Die Membranen können zu den gängigen Modulen verbaut werden, wie beispielsweise zu Hohlfasermodulen, spiralgewundenen Wickelmodulen, Platten-Modulen, Cross-Flow-Modulen oder Deadend-Modulen.

Alle vorstehenden Symbole der vorstehenden Formeln weisen ihre Bedeutungen jeweils unabhängig voneinander auf. In allen Formeln ist das Siliciumatom vierwertig.

In den folgenden Beispielen sind, falls jeweils nicht anders angegeben, alle Mengen- und Prozentangaben auf das Gewicht bezogen, alle Drücke 1,013 bar (abs.) und alle Temperaturen 20°C.

Beschreibung der eingesetzten Ausgangsverbindungen:
MQ-Harz: MQ-Harz 804 (0,7 mmol Vinylgruppen/g) der Wacker Chemie AG (Deutschland).
Vinylpolymer: α,ω-Divinylpolydimethylsiloxan mit einer Molmasse von 11300 g/mol der Wacker Chemie AG (Deutschland).
Photoinitiator: 1-Hydroxy-cyclohexyl-phenyl-ketone käuflich erhältlich unter dem Handelsnamen Irgacure^{®} 184 der BASF SE (Deutschland).
Peroxid: Tert-Butylperoxypivalat käuflich erhältlich als 75% Lösung in Alkanen von United Initators (Deutschland).
Si-H-Vernetzer HMS-501: Copolymer aus Dimethylsiloxan- und Hydridomethylsiloxaneinheiten mit einer Molmasse von 900-1200 g/mol und einem Si-H-Anteil von 50-55 mol% Hydridomethylsiloxaneinheiten, käuflich erhältlich von ABCR GmbH & Co. KG, Deutschland.
Si-H-Vernetzer mit terminalen Si-H-Einheiten: α,ω-Si-H-terminiertes Polydimethylsiloxan mit einer Viskosität von 5,5-8 mm²/s (25 °C) und einem Hydridanteil von 0,27-0,35 % der Wacker Chemie AG (Deutschland).
Cylischer Si-H-Vernetzer: Mischung aus Cyclopentahydridomethylsiloxan und Cyclohexahydridomethylsiloxan mit einem Hydridanteil von 1,7 % der Wacker Chemie AG (Deutschland).
Pt-Katalysator: KATALYSATOR EP (1,1,3,3-Tetramethyl-1,3-Divinyldisiloxan-Platinkomplex), käuflich erhältlich bei der Wacker Chemie AG (Deutschland).
Pt-UV-Katalysator: Als Katalysator wird eine, wie in Beispiel 12 in WO2009/092762 beschriebene, Pt-Verbindung eingesetzt.
Inhibitor: 1-Ethinyl-1-cyclohexanol, käuflich erhältlich bei der Firma Sigma-Aldrich, Deutschland.

Für die Herstellung der Siliconmembranen aus den erhaltenen Polymerlösungen wird ein Rakelziehgerät des Typs Coatmaster^{®} 509 MC-I der Firma Erichson eingesetzt, welches mit einem Kammerrakel mit einer Filmbreite von 11 cm und einer Spalthöhe von 600 µm ausgerüstet ist.

In den nachfolgenden Beispielen wurde die Löslichkeit des Polymeranteils der hergestellten Membranen wie folgt bestimmt ("Löslichkeitstest"):
Das Membranstück wird bei 100°C getrocknet, gewogen und eine Stunde bei 82°C und 1,013 bar (abs.) in iso-Propanol extrahiert. Nicht vernetzte Membranen lösen sich unter diesen Bedingungen vollständig auf. Nach einer Stunde wird die Membran erneut bei 100°C getrocknet und dann gewogen.

### Vergleichsbeispiel, nicht erfindungsgemäß: Herstellung einer nicht vernetzten porösen Siliconmembran

Zu einer Lösung, bestehend aus 30,0 g Isopropanol und 6,0 g eines Organopolysiloxan-Polyharnstoff Copolymeres (SLM TPSE 100 von Wacker Chemie AG) werden 9,0 g Triethylenglykol hinzugegeben. Der gesamte Ansatz wird im Anschluss daran 1 h bei Raumtemperatur auf einem Vertikalschüttler gelöst, so dass eine klare, viskose Lösung mit einem Feststoffgehalt von 13 Gew.-% erhalten wird.

Zur Herstellung der Membran wird zunächst als Substrat eine Glasplatte eingesetzt, welche mit Hilfe einer Vakuumsaugplatte fixiert wird. Die Glasplatte wird vor dem Rakelauftrag mit einem in Ethanol getränktem Reinraumtuch abgewischt. Auf diese Weise werden eventuell vorhandene Partikelverunreinigungen entfernt.
Im Anschluss daran wird der Filmziehrahmen mit der Lösung befüllt und mit einer konstanten Filmziehgeschwindigkeit von 10 mm/s über die Glasplatte gezogen.
Danach wird der noch flüssige Nassfilm bei 20 °C an Luft für 4 h getrocknet, wobei sich eine leichte Trübung des Films zeigt. Die so erhaltene Membran, welche noch Triethylenglkol enthält, wird dann anschließend in Wasser für 6 h eingelegt, um das Triethylenglykol zu entfernen. Danach wird die Membran für 6 h an Luft getrocknet.

Es wird eine ca. 120 µm dicke, undurchsichtige Membran mit einer durchschnittlichen Porengröße von 4 µm erhalten.
Der Vernetzungsgrad gemäß dem oben beschriebenen Löslichkeitstest beträgt 0 Gew.-%.

### Beispiel 1: Herstellung eines vinylgruppenhaltigen, aminofunktionellen Siloxans

3276 g bishydroxy-terminiertes Polydimethylsiloxan mit einer Vinylgruppe pro Molekül und einem mittleren Molekulargewicht von 903 g/mol wurde bei 100 °C mit 921 g N-((3-Aminoproyl)-dimethylsilyl)-2,2dimethyl-1-aza-2-silacylopentan umgesetzt. ¹H-NMR und ²⁹Si-NMR zeigten, dass nach 3 h alle OH-Gruppen zu Aminopropyl-Einheiten umgesetzt waren. Das Produkt wurde mittels Dünnschichten aufgereinigt; es hat eine Viskosität von 13 mPas (Die Fließkurve wurde nach Temperierung auf 25 °C mit einem Platte-Kegel-Viskosimeter unter Verwendung von einem Kegel 1°/40 mm aufgenommen. Dabei wurde nach einer Vorscherung die Schubspannung von 1000 mPa in Stufen von 400 mPa auf 5000 mPa erhöht. Die resultierenden Scherraten wurden gemessen. Die Auswertung erfolgte nach Newton.).

### Beispiel 2: Herstellung eines vinylgruppenhaltigen Organopolysiloxan-Polyharnstoff Copolymeres

20 g des vinylgruppenhaltigen, aminofunktionellen Siloxans aus Beispiel 1, 0,17 g 2-Methylpentamethylendiamin, 2,52 g 1,3-Bis(1-isocyanato-1-methylethyl)benzol und 0,9 g 4,4'-Methylenbis(cyclohexylisocyanat), werden in 170 mL THF 3 h bei 80 °C bis zum vollständigen Umsatz aller Monomere gerührt. Es entsteht eine hochviskose Masse. Das Lösemittel wird bei 100 °C und 10 mbar entfernt. Man erhält ein transparentes Polymer mit einer mittleren Molmasse von M_{w}=76000 g/mol und M_{w/}Mₙ=2,2, gemessen mittels GPC (kalibriert gegen Polystyrol-Standard; THF mit 0,5 % Triethylamin als Elutionsmittel; Flussrate 0,7 mL/min; Säulen: ResiPore u. MesoPore 300x7,5 mm; ELSD-Detektor).

### Beispiel 9: Herstellung einer vernetzten porösen Siliconmembran durch Hydrosilylierung

Zu einer Lösung, bestehend aus 12 g Tetrahydrofuran und 3,04 g vinylgruppenhaltigen Organopolysiloxan-Polyharnstoff Copolymeres aus Beispiel 2 werden 4,5 g Triethylenglykol, 0,27 g Si-H-Vernetzer HMS-501, 1,23 g Vinylpolymer als Alkenylgruppen enthaltende Siliconverbindung S2 sowie 170 ppm Pt-Katalysator und 0,03 g Ethinylcyclohexan (jeweils bezogen auf das Organopolysiloxan-Polyharnstoff Copolymer) hinzugegeben. Der gesamte Ansatz wird im Anschluss daran 1 h bei Raumtemperatur auf einem Vertikalschüttler gelöst, so dass eine klare, viskose Lösung mit einem Feststoffgehalt von 21 Gew.-% erhalten wird.

Zur Herstellung der Membran wird zunächst als Substrat eine Glasplatte eingesetzt, welche mit Hilfe einer Vakuumsaugplatte fixiert wird. Die Glasplatte wird vor dem Rakelauftrag mit einem in Ethanol getränktem Reinraumtuch abgewischt. Auf diese Weise werden eventuell vorhandene Partikelverunreinigungen entfernt.

Im Anschluss daran wird der Filmziehrahmen mit der Lösung befüllt und mit einer konstanten Filmziehgeschwindigkeit von 10 mm/s über die Glasplatte gezogen.

Danach wird der noch flüssige Nassfilm bei 20 °C an Luft für 4 h getrocknet, wobei sich eine leichte Trübung des Films zeigt.

Die so erhaltene Membran, welche noch Triethylenglkol enthält, wird dann anschließend in Wasser für 6 h eingelegt, um das Triethylenglykol zu entfernen. Danach wird die Membran für 6 h an Luft getrocknet und anschließend bei 15 min bei 100 °C vernetzt.

Es wird eine ca. 109 µm dicke, undurchsichtige Membran mit einer durchschnittlichen Porengröße von 4 µm erhalten.

Der Vernetzungsgrad gemäß dem oben beschriebenen Löslichkeitstest beträgt 80 Gew.-%.

### Beispiel 10: Herstellung einer vernetzten porösen Siliconmembran durch Hydrosilylierung

Zu einer Lösung, bestehend aus 24 g Tetrahydrofuran und 6,0 g vinylgruppenhaltigen Organopolysiloxan-Polyharnstoff Copolymeres aus Beispiel 2 werden 9 g Triethylenglykol, 0,26 g Cylischer Si-H-Vernetzer, 0,61 g Vinylpolymer, 0,6 g MQ-Harz 804 als Alkenylgruppen enthaltende Siliconverbindung S2 sowie 170 ppm Pt-Katalysator (bezogen auf das Organopolysiloxan-Polyharnstoff Copolymer) und 0,045 g Ethinylcyclohexan hinzugegeben. Der gesamte Ansatz wird im Anschluss daran 1 h bei Raumtemperatur auf einem Vertikalschüttler gelöst, so dass eine klare, viskose Lösung mit einem Feststoffgehalt von 18 Gew.-% erhalten wird.

Zur Herstellung der Membran wird zunächst als Substrat eine Glasplatte eingesetzt, welche mit Hilfe einer Vakuumsaugplatte fixiert wird. Die Glasplatte wird vor dem Rakelauftrag mit einem in Ethanol getränktem Reinraumtuch abgewischt. Auf diese Weise werden eventuell vorhandene Partikelverunreinigungen entfernt.

Im Anschluss daran wird der Filmziehrahmen mit der Lösung befüllt und mit einer konstanten Filmziehgeschwindigkeit von 10 mm/s über die Glasplatte gezogen.

Danach wird der noch flüssige Nassfilm bei 20 °C an Luft für 4 h getrocknet, wobei sich eine leichte Trübung des Films zeigt.

Die so erhaltene Membran, welche noch Triethylenglykol enthält, wird dann anschließend in Wasser für 6 h eingelegt, um das Triethylenglykol zu entfernen. Danach wird die Membran für 6 h an Luft getrocknet und anschließend bei 15 min bei 100 °C vernetzt.

Es wird eine ca. 109 µm dicke, undurchsichtige Membran mit einer durchschnittlichen Porengröße von 4 µm erhalten.

Der Vernetzungsgrad gemäß dem oben beschriebenen Löslichkeitstest beträgt 65 Gew.-%.

## Patentansprüche

1. Verfahren zur Herstellung dünner poröser Membranen mit Schichtdicken von 1 µm bis 10000 µm, aus thermoplastischer Siliconverbindung S, bei dem
in einem ersten Schritt eine Lösung oder Suspension aus Siliconzusammensetzung SZ, die Alkenylgruppen enthaltendes thermoplastisches Siliconelastomer S1, Alkenylgruppen enthaltende Siliconverbindung S2 und Vernetzer V enthält, in einem Gemisch aus Lösungsmittel L1 und Lösungsmittel L2 gebildet wird, wobei das Lösungsmittel L1 leichter entfernbar aus der im ersten Schritt hergestellten Lösung oder Suspension aus Siliconzusammensetzung SZ ist als das Lösungsmittel L2 und wobei die maximal erreichbare Konzentration der Siliconzusammensetzung SZ im Lösungsmittel L1 höher ist als die maximal erreichbare Konzentration der Siliconzusammensetzung SZ im Lösungsmittel L2,
in einem zweiten Schritt die Lösung oder Suspension in eine Form gebracht wird,
in einem dritten Schritt Lösungsmittel L1 aus der Lösung oder Suspension entfernt wird bis die Löslichkeit der Siliconzusammensetzung SZ im Gemisch aus Lösungsmittel L1 und Lösungsmittel L2 unterschritten wird, wobei sich eine an Siliconzusammensetzung SZ reiche Phase A und eine an Siliconzusammensetzung SZ arme Phase B ausbildet und damit die Strukturbildung durch die Phase A erfolgt und
in einem vierten Schritt das Lösungsmittel L2 und Reste des Lösungsmittels L1 entfernt werden und die Siliconzusammensetzung SZ einer Vernetzung unterworfen wird, wobei Siliconverbindung S gebildet wird,
wobei als thermoplastisches Siliconelastomer S1 Organopolysiloxan/Polyharnstoff/Polyurethan/Polyamid oder Polyoxalyldiamin-Copolymer der allgemeinen Formel (I) 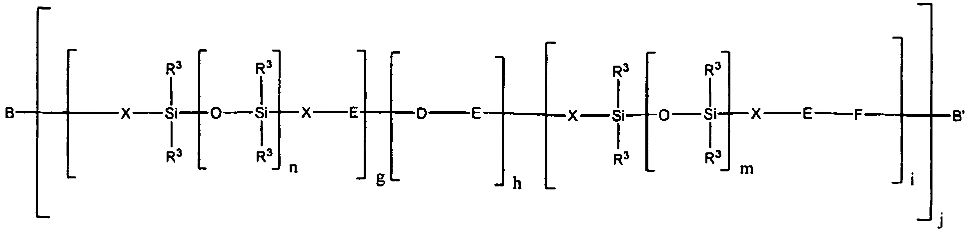 eingesetzt wird, wobei das Strukturelement E ausgewählt wird aus den allgemeinen Formeln (Ia - f) 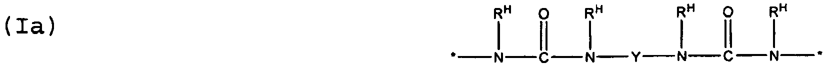 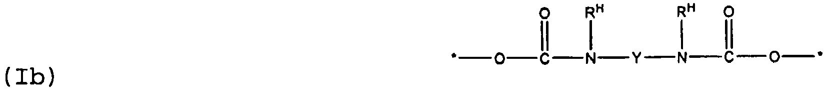 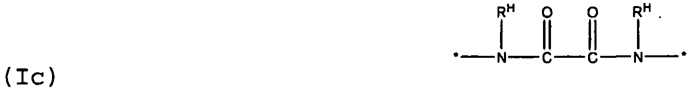 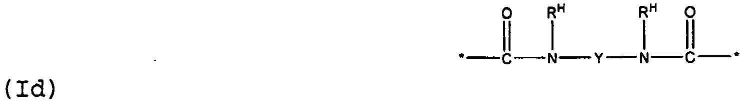 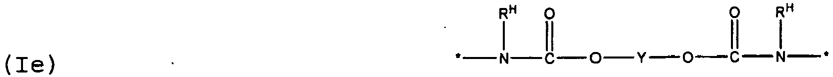 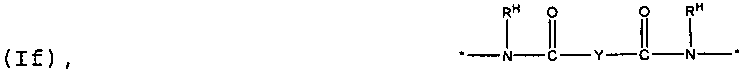 wobei das Strukturelement F ausgewählt wird aus den allgemeinen Formeln (IIa -f) 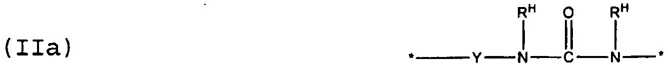 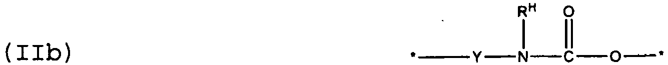 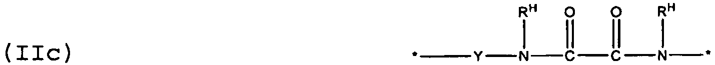 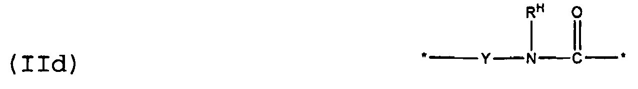 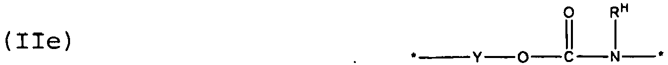 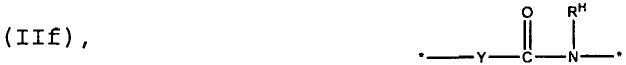 wobei
**R³** substituierte oder unsubstituierte Kohlenwasserstoffreste bedeuten, die durch Sauerstoff- oder Stickstoffatome unterbrochen sein können,
**R^{H}** Wasserstoff, oder die Bedeutung von **R³** hat,
**X** einen Alkylen-Rest mit 1 bis 20 Kohlenstoffatomen, in dem einander nicht benachbarte Methyleneinheiten durch Gruppen -O- ersetzt sein können, oder einen Arylenrest mit 6 bis 22 Kohlenstoffatomen,
**Y** einen zweiwertigen, gegebenenfalls durch Fluor oder Chlor substituierten Kohlenwasserstoffrest mit 1 bis 20 Kohlenstoffatomen,
**D** einen gegebenenfalls durch Fluor, Chlor, C₁-C₆-Alkyl- oder C₁-C₆-Alkylester substituierten Alkylenrest mit 1 bis 700 Kohlenstoffatomen, in dem einander nicht benachbarte Methyleneinheiten durch Gruppen -O-, -COO-, -OCO-, oder-OCOO-, ersetzt sein können, oder Arylenrest mit 6 bis 22 Kohlenstoffatomen,
**B, B'** eine reaktive oder nicht reaktive Endgruppe, welche kovalent an das Polymer gebunden ist,
**m** eine ganze Zahl von 1 bis 4000,
**n** eine ganze Zahl von 1 bis 4000,
**g** eine ganze Zahl von mindestens 1,
**h** eine ganze Zahl von 0 bis 40,
**i** eine ganze Zahl von 0 bis 30 und
**j** eine ganze Zahl größer 0 bedeuten,
mit der Maßgabe, dass mindestens zwei Reste **R³** pro Molekül mindestens eine Alkenylgruppe enthalten und wobei die Siliconverbindung S2 eine Zusammensetzung der durchschnittlichen allgemeinen Formel (V)
R¹ₐR²_{b}SiO_{(4-a-b)/2} (V),
besitzt, in der
**R¹** einen einwertigen, gegebenenfalls halogen- oder cyanosubstituierten, gegebenenfalls über eine organische zweiwertige Gruppe an Silicium gebundenen C₁-C₁₀-Kohlenwasserstoffrest, der aliphatische Kohlenstoff-Kohlenstoff Mehrfachbindungen enthält,
**R²** einen einwertigen, gegebenenfalls halogen- oder cyanosubstituierten, über SiC-gebundenen C₁-C₁₀-Kohlenwasserstoffrest, der frei ist von aliphatischen Kohlenstoff-Kohlenstoff Mehrfachbindungen
**a** eine solche nichtnegative Zahl, dass mindestens zwei Reste **R¹** in jedem Molekül vorhanden sind, und
**b** eine nicht negative Zahl, so dass **(a+b)** im Bereich von 0,01 bis 2,5 liegt, bedeuten.

2. Verfahren nach Anspruch 1, bei dem die Alkenylgruppen enthaltenden Reste **R³** Alkenylreste mit 2 bis 12 Kohlenstoffatomen sind.

3. Verfahren nach Anspruch 1 oder 2, bei dem der Vernetzer V ausgewählt wird aus mindestens zwei SiH-Funktionen pro Molekül enthaltenden Organosiliciumverbindungen, Peroxiden und Azoverbindungen.

4. Verfahren nach Anspruch 3, bei dem die mindestens zwei SiH-Funktionen pro Molekül enthaltende Organosiliciumverbindung eine Zusammensetzung der durchschnittlichen allgemeinen Formel (III)
H_{f}R⁵_{g}SiO_{(4-f-g)/2} (III),
besitzt, in der
**R⁵** einen einwertigen, gegebenenfalls halogen- oder cyanosubstituierten, über SiC-gebundenen C₁-C₁₈-Kohlenwasserstoffrest, der frei ist von aliphatischen Kohlenstoff-Kohlenstoff Mehrfachbindungen und
**f** und **g** nichtnegative ganze Zahlen sind, mit der Maßgabe, dass 0,5<**(f+g)**<3,0 und 0<**f**<2, und dass mindestens zwei siliciumgebundene Wasserstoffatome pro Molekül vorhanden sind.

5. Verfahren nach Anspruch 1 bis 4, bei dem die maximal erreichbare Konzentration der Siliconzusammensetzung SZ mindestens um den Faktor 5 im Lösungsmittel L1 höher als im Lösungsmittel L2 ist.

6. Membranen aus Siliconverbindung S, herstellbar nach dem Verfahren nach Anspruch 1 bis 5.

7. Verwendung der Membranen nach Anspruch 6 zur Trennung von Gemischen, in Wundpflastern, zur Beschichtung von Gehäusen, Baustoffen, als Schicht in Textilien oder als Verpackungsmaterialien.

## Claims

1. Process for producing thin porous membranes having layer thicknesses from 1 µm to 10 000 µm, comprising thermoplastic silicone compound S, wherein
a first step comprises forming a solution or suspension from silicone composition SZ which contains alkenyl-containing thermoplastic silicone elastomer S1, alkenyl-containing silicone compound S2 and crosslinker V, in a mixture of solvent L1 and solvent L2, where solvent L1 is easier than solvent L2 to remove from the solution or suspension prepared in the first step from silicone composition SZ and where the maximum concentration of silicone composition SZ attainable in solvent L1 is higher than the maximum concentration of silicone composition SZ attainable in solvent L2,
a second step comprises introducing the solution or suspension into a mould,
a third step comprises removing solvent L1 from the solution or suspension until the solubility of silicone composition SZ in the mixture of solvent L1 and solvent L2 is forfeited to form a phase A, which is rich in silicone composition SZ, and a phase B, which is lean in silicone composition SZ and hence to effect structure formation by said phase A, and
a fourth step comprises removing said solvent L2 and residues of solvent L1, and subjecting the silicone composition SZ to a crosslinking reaction to form silicone compound S, wherein said thermoplastic silicone elastomer S1 utilizes organopolysiloxane/polyurea/polyurethane/polyamide or polyoxalyldiamine copolymers of general formula (I) 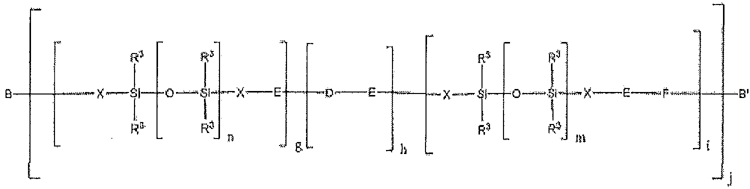 where structural element **E** is selected from the general formulae (Ia - f) 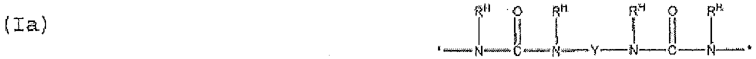 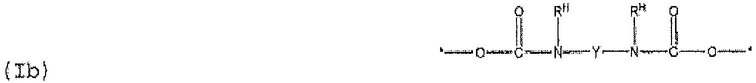 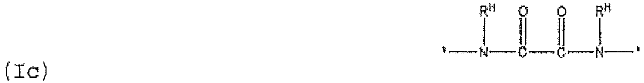 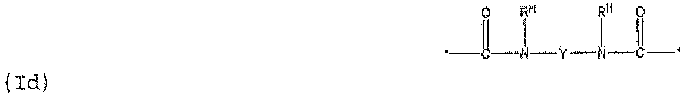 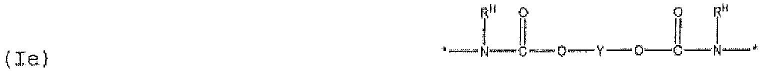 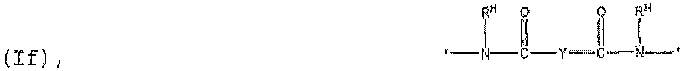 where structural element F is selected from the general formulae (IIa - f) 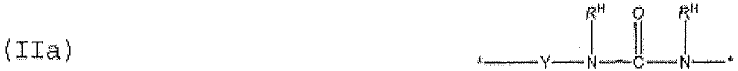 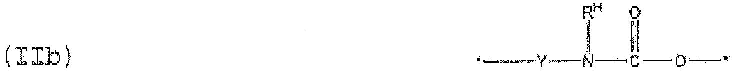 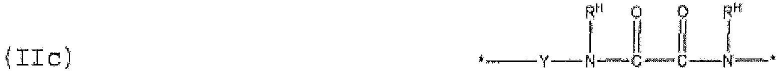 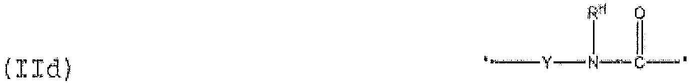 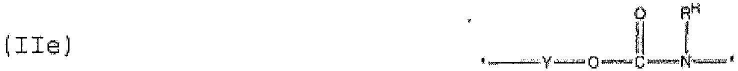 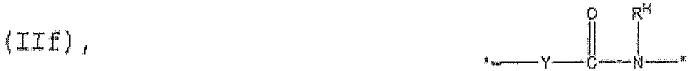 where
**R³** represents substituted or unsubstituted hydrocarbon radicals which may be interrupted by oxygen or nitrogen atoms,
**R^{H}** represents hydrogen or has the meanings of **R³,**
**X** represents an alkylene radical of 1 to 20 carbon atoms where mutually non-adjacent methylene units may be replaced by -O- groups, or an arylene radical of 6 to 22 carbon atoms,
**Y** represents a divalent optionally fluorine- or chlorine-substituted hydrocarbon radical of 1 to 20 carbon atoms,
**D** represents an alkylene radical of 1 to 700 carbon atoms which is optionally substituted by fluorine, chlorine, C₁-C₆ alkyl or C₁-C₆ alkyl ester and in which mutually non-adjacent methylene units may be replaced by -O-, -COO-, -OCO-, or -OCOO- groups, or an arylene radical of 6 to 22 carbon atoms,
**B** and **B'** each represent a reactive or non-reactive end group attached to the polymer by a covalent bond,
**m** represents an integer from 1 to 4000,
**n** represents an integer from 1 to 4000,
**g** represents an integer of not less than 1,
**h** represents an integer from 0 to 40,
**i** represents an integer from 0 to 30, and
**j** represents an integer above 0, with the proviso that at least two **R³** radicals per molecule contain at least one alkenyl group and where the silicone compound S2 has a composition of average general formula (V)
R¹ₐR²_{b}SiO_{(4-a-b)/2} (V),
where
**R¹** represents a monovalent, optionally halogen- or cyano-substituted C₁-C₁₀ hydrocarbon radical which contains aliphatic carbon-carbon multiple bonds and is optionally attached to silicon via an organic divalent group,
**R²** represents a monovalent, optionally halogen- or cyano-substituted C₁-C₁₀ hydrocarbon radical which is free of aliphatic carbon-carbon multiple bonds and is attached via SiC,
**a** represents such a non-negative number that every molecule contains not less than two **R¹** radicals, and
**b** represents a non-negative number such that **(a+b)** lies in the range from 0.01 to 2.5.

2. Process according to Claim 1, wherein the **R³** radicals containing alkenyl groups are alkenyl radicals having 2 to 12 carbon atoms.

3. Process according to Claim 1 or 2, wherein the crosslinker V is selected from organosilicon compounds containing two or more SiH functions per molecule, peroxides and azo compounds.

4. Process according to Claim 3, wherein the organosilicon compound containing two or more SiH functions per molecule has a composition of average general formula (III)
H_{f}R⁵_{g}SiO_{(4-f-g)/2} (III),
where
**R⁵** represents a monovalent, optionally halogen- or cyano-substituted C₁-C₁₈ hydrocarbon radical which is free of aliphatic carbon-carbon multiple bonds and is attached via SiC, and
**f** and **g** represent non-negative integers, with the proviso that 0.5<**(f+g)**<3.0 and 0<**f**<2, and that each molecule contains at least two silicon-attached hydrogen atoms.

5. Process according to Claim 1 to 4, wherein the maximum attainable concentration of silicone composition SZ in solvent L1 is not less than 5 times higher than that in solvent L2.

6. Membranes from silicone compound S, obtainable by the process of Claim 1 to 5.

7. Use of membranes according to Claim 6 for separation of mixtures, in wound patches, for coating housings, building products, as a layer in textiles or as packaging materials.

## Revendications

1. Procédé de fabrication de membranes poreuses minces ayant des épaisseurs de couches de 1 µm à 10 000 µm, à partir d'un composé de silicium thermoplastique S, selon lequel
lors d'une première étape, une solution ou suspension d'une composition de silicium SZ, qui contient un élastomère de silicium thermoplastique contenant des groupes alcényle S1, un composé de silicium contenant des groupes alcényle S2 et un agent de réticulation V, est formée dans un mélange de solvant L1 et de solvant L2, le solvant L1 étant plus facilement éliminable de la solution ou suspension de composition de silicium SZ fabriquée lors de la première étape que le solvant L2, et la concentration maximale atteignable de la composition de silicium SZ dans le solvant L1 étant supérieure à la concentration maximale atteignable de la composition de silicium SZ dans le solvant L2,
lors d'une deuxième étape, la solution ou suspension est placée dans un moule,
lors d'une troisième étape, le solvant L1 est éliminé de la solution ou de la suspension jusqu'à passer en dessous de la solubilité de la composition de silicium SZ dans le mélange du solvant L1 et du solvant L2, une phase A riche en composition de silicium SZ et une phase B pauvre en composition de silicium SZ se formant, et la structuration ayant par conséquent lieu par la phase A, et
lors d'une quatrième étape, le solvant L2 et les résidus du solvant L1 sont éliminés et la composition de silicium SZ est soumise à une réticulation, le composé de silicium S étant formé,
un organopolysiloxane/une polyurée/un polyuréthane/un polyamide ou un copolymère de polyoxalyldiamine de formule générale (I) 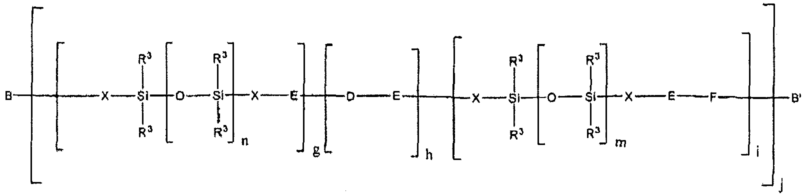 étant utilisé en tant qu'élastomère de silicium thermoplastique S1, l'élément structural E étant choisi parmi les formules générales (Ia à f) 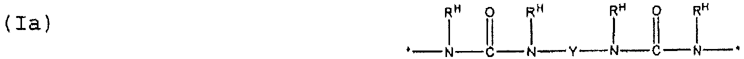 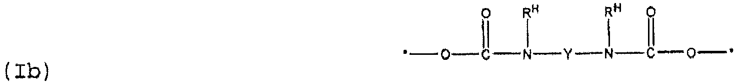 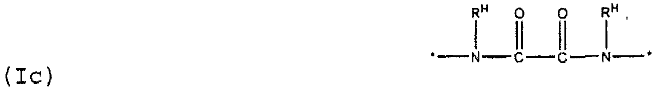 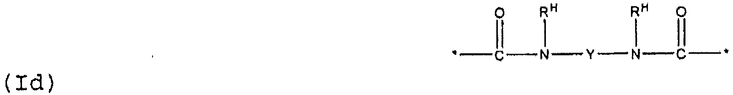 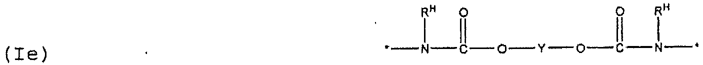 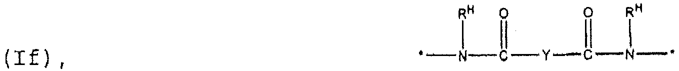 l'élément structural F étant choisi parmi les formules générales (IIa à f) 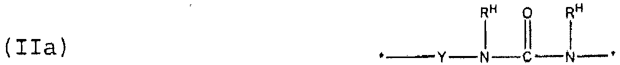 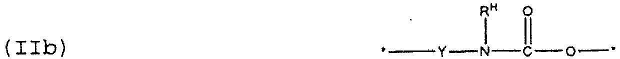 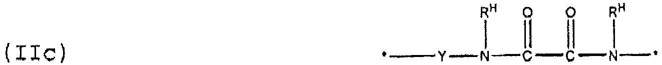 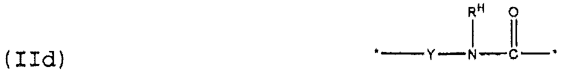 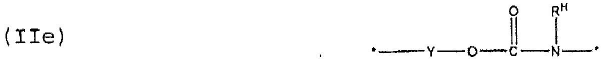 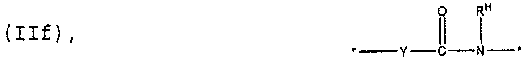 dans lesquelles
les **R³** signifient des radicaux hydrocarbonés substitués ou non substitués, qui peuvent être interrompus par des atomes d'oxygène ou d'azote,
R^{H} signifie l'hydrogène ou a la signification de R³,
X signifie un radical alkylène de 1 à 20 atomes de carbone, dans lequel des unités de méthylène non voisines les unes des autres peuvent être remplacées par des groupes -O-, ou un radical arylène de 6 à 22 atomes de carbone,
Y signifie un radical hydrocarboné bivalent, éventuellement substitué par fluor ou chlore, de 1 à 20 atomes de carbone,
D signifie un radical alkylène éventuellement substitué par fluor, chlore, alkyle en C₁-C₆ ou ester alkylique en C₁-C₆, de 1 à 700 atomes de carbone, dans lequel des unités méthylène non voisines les unes des autres peuvent être remplacées par des groupes -O-,-COO-, -OCO- ou -OCOO-, ou un radical arylène de 6 à 22 atomes de carbone,
B, B' signifient un groupe terminal réactif ou non réactif, qui est relié au polymère par une liaison covalente,
m signifie un nombre entier de 1 à 4 000,
n signifie un nombre entier de 1 à 4 000,
g signifie un nombre entier d'au moins 1,
h signifie un nombre entier de 0 à 40,
i signifie un nombre entier de 0 à 30, et
j signifie un nombre entier supérieur à 0,
à condition qu'au moins deux radicaux R³ par molécule contiennent au moins un groupe alcényle, et le composé de silicium S2 présentant une composition de la formule générale moyenne (V)
R¹ₐR²_{b}SiO_{(4-a-b)/2} (V)
dans laquelle
R¹ signifie un radical hydrocarboné en C₁-C₁₀ monovalent, éventuellement substitué par halogène ou cyano, éventuellement relié par un groupe organique bivalent au silicium, qui contient des liaisons carbone-carbone multiples aliphatiques,
R² signifie un radical hydrocarboné en C₁-C₁₀ monovalent, éventuellement substitué par halogène ou cyano, relié par SiC, qui est exempt de liaisons carbone-carbone multiples aliphatiques,
a signifie un nombre non négatif tel qu'au moins deux radicaux R¹ soient présents dans chaque molécule, et
b signifie un nombre non négatif tel que (a+b) se situe dans la plage allant de 0,01 à 2,5.

2. Procédé selon la revendication 1, dans lequel les radicaux R³ contenant des groupes alcényle sont des radicaux alcényle de 2 à 12 atomes de carbone.

3. Procédé selon la revendication 1 ou 2, dans lequel l'agent de réticulation V est choisi parmi les composés d'organosilicium contenant au moins deux fonctions SiH par molécule, les peroxydes et les composés azo.

4. Procédé selon la revendication 3, dans lequel le composé d'organosilicium contenant au moins deux fonctions SiH par molécule présente une composition de la formule générale moyenne (III)
H_{f}R⁵_{g}SiO_{(4-f-g)/2} (III)
dans laquelle
R⁵ signifie un radical hydrocarboné en C₁-C₁₈ monovalent, éventuellement substitué par halogène ou cyano, relié par SiC, qui est exempt de liaisons carbone-carbone multiples aliphatiques, et
f et g signifient des nombres entiers non négatifs,
à condition que 0,5 < (f+g) < 3,0, et 0 < f < 2, et qu'au moins deux atomes d'hydrogène reliés au silicium par molécule soient présents.

5. Procédé selon les revendications 1 à 4, dans lequel la concentration maximale atteignable de la composition de silicium SZ dans le solvant L1 est supérieure d'au moins un facteur de 5 à celle dans le solvant L2.

6. Membranes en un composé de silicium S, pouvant être fabriquées par le procédé selon les revendications 1 à 5.

7. Utilisation des membranes selon la revendication 6 pour la séparation de mélanges, dans des pansements, pour le revêtement de boîtiers, de matériaux de construction, en tant que couche dans des textiles ou en tant que matériaux d'emballage.
